# EUROPEAN PATENT SPECIFICATION

(11) **EP 2 424 740 B1**
(45) Date of publication and mention of the grant of the patent: **16.10.2013**
(21) Application number: 10719312.0
(22) Date of filing: 28.04.2010
(51) Int. Cl.: C08C 19/28, B60C 1/00, C08C 19/25, C08F 279/02, C08K 5/5425, C08K 5/548, C08L 7/00, C08K 3/36

(54) **ELASTOMER COMPOSITIONS MODIFIED BY SILANES**
MIT SILANEN MODIFIZIERTE KAUTSCHUKZUSAMMENSETZUNGEN
COMPOSITIONS À BASE D'ÉLASTOMÈRES MODIFIÉS PAR DES SILANES

(30) Priority: 30.04.2009 GB 0907449; 06.01.2010 GB 201000106
(43) Date of publication of application: 07.03.2012
(73) Proprietor: Dow Corning Corporation, Midland, MI 48611 (US)
(72) Inventor: BACKER, Michael, B-1495A Marbais (BR.W.) (BE); CHAUSSEE, Thomas, F-59163 Thivencelle (FR); DE BUYL, Francois, B-1560 Hoeilaart (BE); SMITS, Valerie, B-6540 Lobbes (BE)
(74) Representative: Donlan, Andrew Michael
(86) International application number: PCT/EP2010/055754
(87) International publication number: WO 2010/125123

(56) References cited:
- EP-A1- 2 039 705
- US-A- 3 503 943
- US-A- 4 481 322

## Description

This invention relates to the modification of elastomers by reaction with unsaturated silanes, to the modified elastomers produced and to articles produced by shaping and curing modified elastomer compositions. It also relates to the use of unsaturated silanes as coupling agents in filled elastomer compositions.

WO-01/49781-A and US 2004/0249048-A1 describe a sulphur-vulcanisable rubber composition useful for the manufacture of tyres comprising a diene elastomer, a reinforcing white filler, a coupling agent and a heat-triggered radical initiator. The coupling agent is an alkoxysilane having at least one activated double bond, in particular trimethoxysilylpropyl methacrylate.

WO 01/49782-A and US 2003/0065104 describe a rubber composition comprising a diene elastomer, a reinforcing agent and a coupling agent. The coupling agent comprises an ester function of an ά, β-unsaturated carboxylic acid bearing a carbonyl group on its γ-position. In particular acrylamido-functional silanes were described, e.g. fumaramic and maleamic esters.

WO 01/49783-A and US 2003/0144403 describe the use of a functionalized organosilane comprising an activated ethylenic double bond, together with a radical initiator, as a coupling system in compositions comprising a diene elastomer and a white reinforcing filler. In particular acrylamido-functional silanes were described, e.g. fumaramic and maleamic esters.

EP 1134251 describes a primer composition containing 2 polymers each having at least one silicon-containing group having a hydroxyl group or a hydrolysable group bonded to a silicon atom and capable of cross-linking by forming a siloxane bond. The polymerisation is effected in presence of a solvent and a radical initiator.

GB1407827-A describes the polymerisation in aqueous phase and in the presence of a water-soluble free-radical initiator of a mixture of styrene and up to 40% by weight (relative to the mixture) of butadiene with a specific silicon-containing compound having an unsaturated organic radical.

JP2008106118 A and EP2085419 A1 describe a process including subjecting an alkali metal active end of a conjugated diene polymer to a modification reaction with an alkoxysilane compound.

JP 2008/184545-A describes a rubber composition including a filler containing silicic acid, a silane coupling agent and a bismaleimide compound. EP2039705 describes on comparative example 9 a formulation of natural rubber in presence of acryloxypropyltrimethoxysilane, silica, and TESPT coupling agent (=bis(triethoxysilylpropyl)tetrasulfane) among other ingredients, and with a further vulcanization system.

WO 02/22728-A and US 7238740-B describe an elastomeric composition based on an isoprene elastomer, a reinforcing inorganic filler and, as coupling agent, a citracominido-alkoxysilane.

JP632701751 describes the use of thiomethacrylic silanes of the general formula CH₂=C(CH₃)C(=O)S(CH₂)₁₋₆Si(OCH₃)₃ in tire tread compositions of synthetic rubbers.

The process described in WO-01/49781-A requires the presence of a radical initiator. The specific silanes described in JP 2008/184545-A and WO 02/22728-are not commercially available presumably because of cost and/or stability issues.

It is desirable to provide a process for modifying a diene elastomer using an activated silane of reasonable cost and with appropriate thermal stability, without any free radical initiator.

In a process according to the present invention for modifying a diene elastomer by reaction with an olefinically unsaturated silane having at least one hydrolysable group bonded to silicon, the silane has the formula:
- R"-CH=CH-C(O)X-Y-SiRₐR'₍₃₋ₐ₎ (I) or
- R"-C≡C-C(O)X-Y-SiRₐR'₍₃₋ₐ₎ (II)
in which R represents a hydrolysable group; where R is acyloxy, ketoxime, amido, amino, aminoxy, alkenyloxy or alkoxy group containing ethylene glycol polymer chain or ethoxy, R' represents a hydrocarbyl group having 1 to 6 carbon atoms; a has a value in the range 1 to 3 inclusive; Y represents a divalent organic spacer linkage comprising at least one carbon atom separating the linkage -C(O)X- from the Si atom, X is S or O; and R" represents hydrogen or a group having an electron withdrawing effect with respect to the -CH=CH- or - C≡C- bond; and the silane is reacted with the diene elastomer in the absence of any free radical initiator.

An electron-withdrawing moiety is a chemical group which draws electrons away from a reaction centre. The electron-withdrawing moiety R" can in general be any of the groups listed for dienophiles in Michael B. Smith and Jerry March; March's Advanced Organic Chemistry, 5th edition, John Wiley & Sons, New York 2001, at Chapter 15-58 (page 1062). The moiety R" can be especially a C(=O)R*, C(=O)OR*, OC(=O)R*, C(=O)Ar moiety in which Ar represents aryl and R* represents a hydrocarbon moiety. R" can also be a C(=O)-NH-R* moiety. R" cannot be an electron-donating group, for example alcohol group, amino group, or terminal alkyl group such as methyl which furthermore produces steric hindrance to the -CH=CH- or -C≡C- bond.

Optionally Y may additionally include heteroatoms such as, for example, sulphur (S), oxygen (O) or nitrogen (N). In one embodiment X is preferably O.

By a diene elastomer we mean a polymer having elastic properties at room temperature, mixing temperature or at the usage temperature, which can be polymerized from a diene monomer. Typically, a diene elastomer is a polymer containing at least one ene (carbon-carbon double bond, C=C) having a hydrogen atom on the alpha carbon next to the C=C bond. The diene elastomer can be a natural polymer such as natural rubber or can be a synthetic polymer derived at least in part from a diene.

A modified diene elastomer according to the invention is grafted with groups of the formula:
- R"-CH(P)-CH₂-C(O)X-Y-SiRₐR'₍₃₋ₐ₎ and/or the formula
- R"-CH₂-CH(P)-C(O)X-Y-SiRₐR₍₃₋ₐ₎ and/or the formula
- R"-C(P)=CH-C(O)X-Y-SiRaRₐR'₍₃₋ₐ₎ and/or the formula
- R"-CH=C(P)-C(O)X-Y-SiRₐR'_{(3-a),}
where P represents a diene elastomer polymer residue; and Y, X, R, R', R" and a are defined as above.

The invention also includes the use of a silane having the formula:
- R"-CH=CH- C(O)X-Y-SiRₐR'₍₃₋ₐ₎ (I) or
- R"-C≡C- C(O)X-Y-SiRₐR'₍₃₋ₐ₎ (II)
wherein R, R', a, Y, X and R" are defined as above, as a coupling agent for a diene elastomer composition containing a reinforcing filler.

Diene elastomer compositions which are to be cured to a shaped rubber article generally contain a filler, particularly a reinforcing filler such as silica or carbon black. The rubber compositions are produced in suitable mixers, and are usually produced using two successive preparation phases: a first phase of thermo-mechanical mixing or kneading (sometimes referred to "non-productive" phase) at high temperature, up to a maximum temperature (Tₘₐₓ) between 110°-190°C, followed by a second phase of mechanical mixing (sometimes referred to "productive" phase) at temperature typically less than 110°C, during which the vulcanization agents are incorporated. During the thermo-mechanical kneading phase, the filler and the rubber are mixed together in one or more steps.

In some applications such as energy-saving 'green' tires, particularly isoprene polymer tyres for heavy vehicles, it is helpful to replace the carbon black filler using a combination of silica and a coupling agent, as disclosed in patents W02006125534A1, WO2006125533A1 and W02006125532A1. When producing rubber compositions, it is desirable that the compositions should be easily processable and require a low mixing energy, while producing cured rubber products having good physical properties such as hardness, tensile modulus and viscoelastic properties. Mixing a filler such as silica containing hydroxyl groups into an organic elastomer composition can be difficult. Various coupling agents have been used to improve the dispersion of the hydroxyl-containing filler in the rubber composition.

When the unsaturated silane according to the invention is present in the thermo-mechanical kneading phase, it can react with the diene elastomer to form a modified diene elastomer and can also act as a coupling agent bonding the filler to the diene elastomer. The unsaturated silanes according to the present invention react with the diene elastomer to form a grafted diene elastomer in the absence of any free radical initiator, which is advantageous because free radical initiators such as peroxides tend to degrade diene elastomers. In addition, safe handling and mixing of peroxides can be difficult for rubber compounders. The grafted diene elastomer produced has improved adhesion to substrates, for example reinforcing cords and fabrics used as reinforcement in rubber articles such as tyres.

Each hydrolysable group R in the -SiRₐR'₍₃₋ₐ₎ group of the unsaturated silane of the formula:
- R"-CH=CH-C(O)X-Y-SiRₐRₐR'₍₃₋ₐ₎ (I) or
- R"-C≡C-C(O)X-Y-SiRₐR'₍₃₋ₐ₎ (II)
may be the same or different and is preferably an alkoxy group, although alternative hydrolysable groups such as acyloxy, for example acetoxy, ketoxime, amino, amido, aminoxy or alkenyloxy groups can be used. When R contains an alkoxy group, each R also generally contains an ethoxy group or an ethylene glycol polymer chain. However most preferably each R is ethoxy group. The value of a in the silane (I) or (II) can for example be 3, for example the silane can be a triethoxysilane, to give the maximum number of cross-linking sites, when curing is done using reactive site from alkoxysilane. However each alkoxy group generates a volatile organic alcohol when it is hydrolysed, and it may be preferred that the value of a in the silane (I) or (II) is 2 or even 1 to minimize the volatile organic material emitted during processing, cross-linking, vulcanisation or during the lifetime of the cured or crude rubber compound. The group R' if present is preferably a methyl, ethyl or phenyl group. Alternative substitution groups on Si atom can be based on the following patents WO2004/078813, WO2005/007066, US20090036701, DE10223073 and EP1683801 or US20060161015.

The unsaturated silane can be partially hydrolysed and condensed into oligomers containing siloxane linkages. For most end uses it is preferred that such oligomers still contain at least one hydrolysable group bonded to Si per unsaturated silane monomer unit to enhance coupling of the unsaturated silane with fillers having surface hydroxyl groups.

In the unsaturated silane of the formula:
- R"-CH=CH-C(O)X-Y-SiRₐR'₍₃₋ₐ₎ (I) or
- R"-C≡C-C(O)X-Y-SiRₐR'₍₃₋ₐ₎ (II),
the spacer linkage Y can in general be a divalent organic group comprising at least one carbon atom, for example an alkylene group such as methylene, ethylene or propylene, or an arylene group. However, as hereinbefore described Y may also include heteroatoms such as O, S and N. When the group R" represents hydrogen and Y is an alkylene linkage, the moiety R"-CH=CH-C(O)X-Y- in the unsaturated silane (I) is an acryloxyalkyl group. We have found that acryloxyalkylsilanes graft to diene elastomers more readily than other unsaturated silane, e.g., methacryloxyalkylsilanes.

Examples of preferred acryloxyalkylsilanes are, γ-acryloxypropyltriethoxysilane, γ-acryloxypropylmethyldiethoxysilane, γ-acryloxypropyldimethylethoxysilane, α-acryloxymethyltriethoxysilane, α -acryloxymethylmethyldiethoxysilane, α-acryloxymethyldimethylethoxysilane. γ-acryloxypropyltriethoxysilane, can be prepared from allyl acrylate and triethoxysilane. acryloxymethyltriethoxysilane can be prepared from acrylic acid and chloromethyltriethoxysilane by the process described in US-A-3179612.

Alternatives structures are based on the reaction product of (1) a functional silane containing at least one primary or secondary amine or a mercapto-functional silane, e.g. mercaptopropyltriethoxysilane, with (2) an organic moiety containing at least 2 acrylate functions, as produced by Sartomer along WO19980280307 described as di, tri, tetra, penta and hexa functional monomers. As set of example one can prepare the following structure using pentaerythritol-tetraacrylate together with mercaptopropylalkoxysilane or methylaminopropylalkoxysilane or phenylaminopropylalkoxysilane as described in EP450624-B, US5532398 A and EP451709 B:

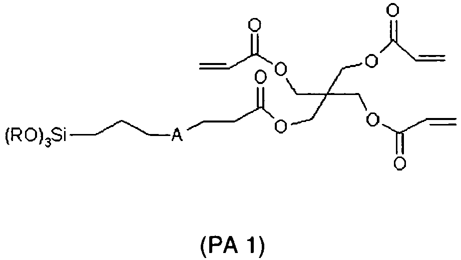

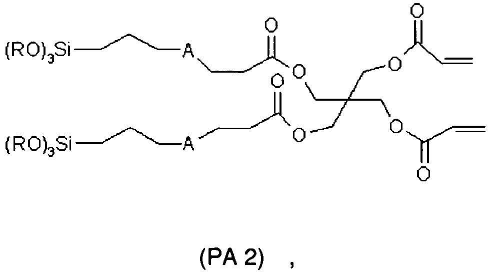

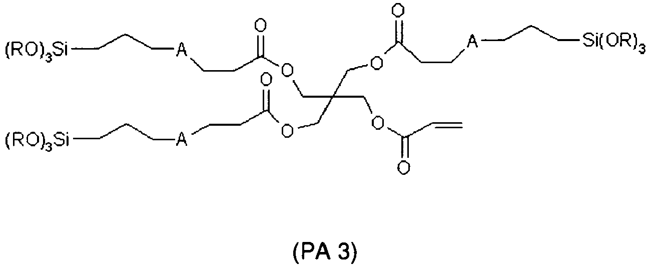

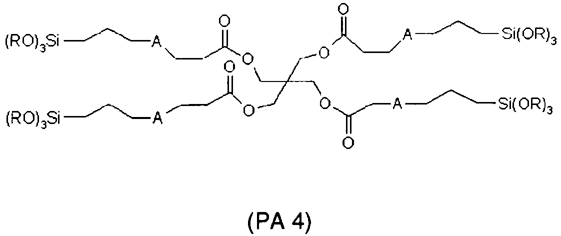

In these formulae (PA1 to PA4) A is selected from S or NR in which R can be H, aryl, alkyl groups, R can alternatively be another alkylsilane. The spacer between A and Si can vary from methyl to undecyl. Each of PA1 to PA4 may be provided in a substantially pure form i.e. approximately 100% PA1, PA2, PA3 or PA4 or may be provided in mixtures containing at least one of PA1, PA2, PA3 or PA4 as the major component and the others as by-products.

To reduce alcohol emission during processing and lifetime of a rubber compound containing PA structures one can use mono or dialkoxysilane instead of trialkoxysilane.

To reduce toxic methanol emission during processing and lifetime, ethoxy silane is preferred over methoxysilane.

As hereinbefore described, the group R" in the unsaturated silane (I) or (II) may be hydrogen or a group having an electron withdrawing effect with respect to the -CH=CH- or - C≡C- bond. One such electron withdrawing group suitable for the present invention is of the formula -C(O)X-Y-SiRₐR'₍₃₋ₐ₎. Alternatively the electron withdrawing group R" can be of the form -C(O)OH or -C(O)XR*, where R* is an alkyl group.

When the electron withdrawing group is -C(O)X-Y-SiRₐR'₍₃₋ₐ₎, the resulting unsaturated silane (silane(III)) can thus be of the form:
- RaR'₍₃₋ₐ₎Si-Y-X(O)C-CH=CH-C(O)X-Y-Si RaR'₍₃₋ₐ₎, or
- RaR'₍₃₋ₐ₎Si-Y-X(O)C-C≡C-C(O)X-Y-Si RaR'₍₃₋ₐ₎.

In this instance therefore unsaturated silane (III) can comprise a bis(trialkoxysilylalkyl) fumarate (trans-isomer) and/or a bis(trialkoxysilylalkyl) maleate (cis-isomer). Their preparation is described in US-A-3179612.

When the electron withdrawing group R" is in the form -C(O)OH or -C(O)XR*, where R* is an alkyl group, the unsaturated silane can be a mono(trialkoxysilylalkyl) fumarate and/or a mono(trialkoxysilylalkyl) maleate, or can be a trialkoxysilylalkyl ester of an alkyl monofumarate and/or an alkyl monomaleate.

The unsaturated silane can also be of the form RₐR'₍₃₋ₐ₎Si-Y-X(O)C-C≡C-C(O)X-Y-SiRₐR'₍₃₋ₐ. Alternatively the bis-silane of the formula
- RaR'₍₃₋ₐ₎Si-Y-X(O)C-CH=CH-C(O)X-Y-Si RaR'₍₃₋ₐ₎ or
- RaR'₍₃₋ₐ₎Si-Y-X(O)C-C≡C-C(O)X-Y-Si RaR'₍₃₋ₐ₎
may be asymmetrical, e.g. with Y, R and/or R' being different on each side of the molecule.

In general, all unsaturated silanes which are silylalkyl esters of an unsaturated acid can be prepared from the unsaturated acid, for example acrylic, maleic, fumaric, propynoic or butyne-dioic acid, by reaction of the corresponding carboxylate salt with the corresponding chloroalkylalkoxysilane. In a first step, the alkali salt of the carboxylic acid is formed either by reaction of the carboxylic acid with alkali alkoxide in alcohol, as described e.g. in US-A-4946977, or by reaction of the carboxylic acid with aqueous base and subsequent removal of the water via azeotropic distillation, as described e.g. in WO-2005/103061. A trialkyl ammonium salt of the carboxylic acid can be formed by direct reaction of the free carboxylic acid with trialkyl amine, preferentially tributyl amine or triethyl amine as described in US-A-3258477 or US-A-3179612. In a second step the carboxylic acid salt is then reacted via nucleophilic substitution reaction with the chloroalkylalkoxysilane under formation of the alkali chloride or trialkylammonium chloride as a by-product. This reaction can be performed with the chloroalkylalkoxysilane under neat condition or in solvents such as benzene, toluene, xylene, or a similar aromatic solvent, as well as methanol, ethanol, or another alcohol-type solvent. It is preferably to have a reaction temperature within the range of 30 to 180°C, preferably within the range of 100 to 160°C. In order to speed up this replacement reaction, phase transfer catalysts of various kinds can be used. Preferable phase transfer catalysts are the following: tetrabutylammonium bromide (TBAB), trioctylmethylammonium chloride, Aliquat® 336 (Cognis GmbH) or similar quaternary ammonium salts (as e.g. used in US 4946977), tributylphosphonium chloride (as e.g. used in US6841694), guanidinium salts (as e.g. used in EP0900801) or cyclic unsaturated amines as 1,8-diazabicyclo[5.4.0]undeca-7-ene (DBU, as e.g. used in WO2005/103061). If necessary, the following polymerization inhibitors can be used throughout preparation and/or purification steps: hydroquinones, phenol compounds such as methoxyphenol and 2,6-di-t-butyl 4-methylphenol, phenothiazine, p-nitrosophenol, amine-type compounds such as e.g. N,N'-diphenyl-p-phenylenediamine or sulfur containing compounds as described in but not limited to the patents cited above.

Preparation methods for the formation of thiocarboxylate -C(=O)-S- compounds have been extensively described in form of the preparation of blocked mercaptosilanes in e.g. WO2004/078813, WO2005/007066, and US20090036701. However the usage of compounds in rubber compounding processes containing an □□□-unsaturated carbonyl including a carbon-carbon double bond next to the carbonyl group has been explicitly ruled out in e.g. EP0958298, EP1270581, US20020055564 or WO03/091314 because the unsaturation □□□ to the carbonyl group of the thioester has the undesirable ability to polymerize during the compounding process or during storage. However, in the present application the "undesired" high reactivity of the unsaturated group next to the electron withdrawing group is a key aspect. The method for preparing such silanes can be therefore found, in those patents

PA type of structures and mixtures thereof can be obtained using a batch or continuous process via Michael addition reaction of a functional silane (mercapto or amino) together with a organic molecule containing at least 2 acrylate moiety following the reaction pathway below as set of example but limiting to the starting material proposed and to the structures obtained, as described by B. C. Ranu and S. Banerjee, Tetrahedron Letters, vol. 48, Iss. 1, pp. 141-143 (2007). In case the silane is a mercapto-functional silane, a catalyst might be used to enhance the reactivity:

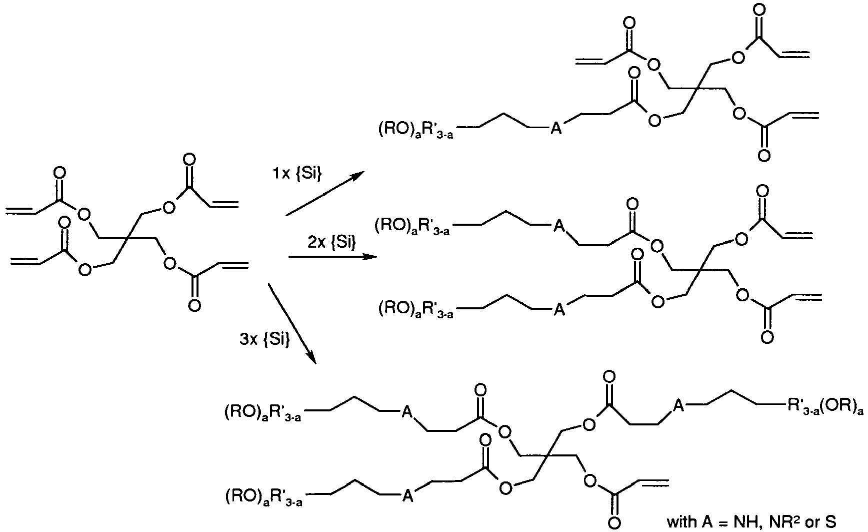

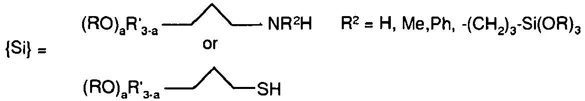

Advantageously those structures will be prepared using a continuous process. To reduce the polydispersity of structure the continuous process should be performed in small tubes, ideally microreactor or micro-channels can be used.

The introduction of larger alcohol as well as alkyl(poly)ether substituents at the silyl functionality starting from chloro-, methoxy and ethoxysilanes are described e.g. in DE10223073 and EP1683801 or US20060161015. The exchange of monoalkoxy substituents with polyols such as e.g. 2-methyl-1,3-propanediol under formation of even oligomeric silane systems has been described e.g. in WO2008/042418.

Blends of unsaturated silanes can be used, for example a blend of γ-acryloxypropyltrimethoxysilane with acryloxypropyltriethoxysilane or a blend of γ-acryloxypropyltrimethoxysilane and/or acryloxymethyltrimethoxysilane with an acryloxysilane containing 1 or 2 Si-alkoxy groups.

Alternatively the unsaturated silane can be supported on carriers, e.g. carbon black, silica, calcium carbonate, waxes or a polymer. This can be useful for handling the material in a plant and also can lead to improve silane solubility/compatibility with rubbers.

The diene elastomer can be natural rubber. We have found that the unsaturated silanes of the invention graft readily to natural rubber and also acts as an effective coupling agent in a curable filled natural rubber composition.

The diene elastomer can alternatively be a synthetic polymer which is a homopolymer or copolymer of a diene monomer (a monomer bearing two double carbon-carbon bonds, whether conjugated or not). Preferably the elastomer is an "essentially unsaturated" diene elastomer, that is a diene elastomer resulting at least in part from conjugated diene monomers, having a content of members or units of diene origin (conjugated dienes) which is greater than 15 mol %. More preferably it is a "highly unsaturated" diene elastomer having a content of units of diene origin (conjugated dienes) which is greater than 50 mol%. Diene elastomers such as butyl rubbers, copolymers of dienes and elastomers of alpha-olefins of the ethylene-propylene diene monomer (EPDM) type, which may be described as "essentially saturated" diene elastomers having a low (less than 15 mol%) content of units of diene origin, can alternatively be used but are less preferred.

The diene elastomer can for example be:
(a) any homopolymer obtained by polymerization of a conjugated diene monomer having 4 to 12 carbon atoms;
(b) any copolymer obtained by copolymerization of one or more dienes conjugated together or with one or more vinyl aromatic compounds having 8 to 20 carbon atoms;
(c) a ternary copolymer obtained by copolymerization of ethylene, of an [alpha]-olefin having 3 to 6 carbon atoms with a non-conjugated diene monomer having 6 to 12 carbon atoms, such as, for example, the elastomers obtained from ethylene, from propylene with a non-conjugated diene monomer of the aforementioned type, such as in particular 1,4-hexadiene, ethylidene norbornene or dicyclopentadiene;
(d) a copolymer of isobutene and isoprene (butyl rubber), and also the halogenated, in particular chlorinated or brominated, versions of this type of copolymer.

Suitable conjugated dienes are, in particular, 1,3-butadiene, 2-methyl-1,3-butadiene, 2,3-di(C₁-C₅ alkyl)-1,3-butadienes such as, for instance, 2,3-dimethyl-1,3-butadiene, 2,3-diethyl-1,3-butadiene, 2-methyl-3-ethyl-1,3-butadiene, 2-methyl-3-isopropyl-1,3-butadiene, an aryl-1,3-butadiene, 1,3-pentadiene and 2,4-hexadiene. Suitable vinylaromatic compounds are, for example, styrene, ortho-, meta- and para-methylstyrene, the commercial mixture "vinyltoluene", para-tert.-butylstyrene, methoxystyrenes, chlorostyrenes, vinylmesitylene, divinylbenzene and vinylnaphthalene.

The copolymers may contain between 99% and 20% by weight of diene units and between 1% and 80% by weight of vinyl aromatic units. The elastomers may have any microstructure, which is a function of the polymerization conditions used, in particular of the presence or absence of a modifying and/or randomizing agent and the quantities of modifying and/or randomizing agent used. The elastomers may for example be block, statistical, sequential or microsequential elastomers, and may be prepared in dispersion or in solution; they may be coupled and/or starred or alternatively functionalized with a coupling and/or starring or functionalizing agent. Examples of preferred block copolymers are styrene-butadiene-styrene (SBS) block copolymers and styrene-ethylene/butadiene-styrene (SEBS) block copolymers.

Preferred are polybutadienes, and in particular those having a content of 1,2-units between 4% and 80%, or those having a content of cis-1,4 of more than 80%, polyisoprenes, butadiene-styrene copolymers, and in particular those having a styrene content of between 5% and 50% by weight and, more particularly, between 20% and 40%, a content of 1,2-bonds of the butadiene fraction of between 4% and 65%, and a content of trans-1,4 bonds of between 20% and 80%, butadiene-isoprene copolymers and in particular those having an isoprene content of between 5% and 90% by weight. In the case of butadiene-styreneisoprene copolymers, those which are suitable are in particular those having a styrene content of between 5% and 50% by weight and, more particularly, between 10% and 40%, an isoprene content of between 15% and 60% by weight, and more particularly between 20% and 50%, a butadiene content of between 5% and 50% by weight, and more particularly between 20% and 40%, a content of 1,2-units of the butadiene fraction of between 4% and 85%, a content of trans-1,4 units of the butadiene fraction of between 6% and 80%, a content of 1,2- plus 3,4-units of the isoprene fraction of between 5% and 70%, and a content of trans-1,4 units of the isoprene fraction of between 10% and 50%.

The elastomer can be an alkoxysilane-terminated diene polymer or a copolymer of the diene and an alkoxy-containing molecule prepared via a tin coupled solution polymerization.

The elastomer and the unsaturated silane can be reacted by various procedures. Although some reaction occurs at ambient temperature, the elastomer and the unsaturated silane are preferably heated together at a temperature of at least 80°C, more preferably to a temperature between 90°-200°C, most preferably between 120°C and 180°C. The elastomer and silane can be mixed by pure mechanical mixing, followed if desired by a separate heating step, but mixing and heating are preferably carried out together so that the elastomer is subjected to mechanical working while it is heated.

The elastomer and the unsaturated silane can be reacted in the presence of a catalyst which accelerates the ene-addition reaction between the activated unsaturated silane and the diene containing rubber polymer, for example a Lewis Acid such as boron triacetate. Use of such a catalyst can reduce the temperature of the thermo-mechanical processing required to effect reaction between the elastomer and the unsaturated silane. This catalyst can also help to disperse further the filler. The catalyst can control the number of links created during the mixing phase to optimize the torque, the grafting and, when hydroxyl containing filler is present, its dispersion. However the diene elastomer and the unsaturated silanes according to the invention react readily at the temperatures conventionally used for thermomechanical kneading of rubber, and it may be desirable to avoid catalyst residues in the grafted elastomer.

The catalyst such as a Lewis acid can also be added during the productive phase in order to accelerate the cure behaviour under heating of the semi-finished article.

When preparing a filled rubber composition, the elastomer and the unsaturated silane can be reacted and then mixed with the filler, but the filler is preferably present during the reaction between the elastomer and the unsaturated silane. The elastomer, the silane and the filler can all be loaded to the same mixer and mixed while being heated, for example by thermo-mechanical kneading. Alternatively the filler can be pre-treated with the unsaturated silane and then mixed with the elastomer, preferably with heating. When the unsaturated silane is present during thermo-mechanical kneading of the diene elastomer and the filler, it reacts with the elastomer to form a modified diene elastomer and also acts as a coupling agent bonding the filler to the elastomer.

The filler is preferably a reinforcing filler. Examples of reinforcing fillers are silica, silicic acid, carbon black, or a mineral oxide of aluminous type such as alumina trihydrate or an aluminium oxide-hydroxide, or a silicate such as an aluminosilicate, or a mixture of these different fillers.

Use of an unsaturated silane according to the invention is particularly advantageous in a curable elastomer composition comprising a filler containing hydroxyl groups, particularly in reducing the mixing energy required for processing the rubber composition and improving the performance properties of products formed by curing the rubber composition. The hydroxyl-containing filler can for example be a mineral filler, particularly a reinforcing filler such as a silica or silicic acid filler, as used in white tire compositions, or a metal oxide such as a mineral oxide of aluminous type such as alumina trihydrate or an aluminium oxide-hydroxide, or carbon black pre-treated with a alkoxysilane such as tetraethyl orthosilicate, or a silicate such as an aluminosilicate or clay, or cellulose or starch, or a mixture of these different fillers.

The reinforcing filler can for example be any commonly employed siliceous filler used in rubber compounding applications, including pyrogenic or precipitated siliceous pigments or aluminosilicates. Precipitated silicas are preferred, for example those obtained by the acidification of a soluble silicate, e.g., sodium silicate. The precipitated silica preferably has a BET surface area, as measured using nitrogen gas, in the range of about 20 to about 600 m²/g , and more usually in a range of about 40 or 50 to about 300 m²/g. The BET method of measuring surface area is described in the Journal of the American Chemical Society, Volume 60, Page 304 (1930). The silica may also be typically characterized by having a dibutylphthalate (DBP) value in a range of about 100 to about 350 cm³/100 g, and more usually about 150 to about 300 cm³/100 g, measured as described in ASTM D2414. The silica, and the alumina or aluminosilicate if used, preferably have a CTAB surface area in a range of about 100 to about 220 m²/g (ASTM D3849). The CTAB surface area is the external surface area as evaluated by cetyl trimethylammonium bromide with a pH of 9. The method is described in ASTM D 3849.

Various commercially available silicas may be considered for use in elastomer compositions according to this invention such as silicas commercially available from Rhodia with, for example, designations of Zeosil^{®} 1165MP, 1115MP, or HRS 1200MP; 200MP premium, 80GR or equivalent silicas available from PPG Industries under the Hi-Sil trademark with designations Hi-Sil^{®} EZ150G, 210, 243, etc; silicas available from Degussa AG with, for example, designations VN3, Ultrasil^{®} 7000 and Ultrasil^{®} 7005, and silicas commercially available from Huber having, for example, a designation of Hubersil^{®} 8745 and Hubersil^{®} 8715. Treated precipitated silicas can be used, for example the aluminium-doped silicas described in EP-A-735088.

If alumina is used in the elastomer compositions of the invention, it can for example be natural aluminium oxide or synthetic aluminium oxide (Al₂O₃) prepared by controlled precipitation of aluminium hydroxide. The reinforcing alumina preferably has a BET surface area from 30 to 400 m²/g, more preferably between 60 and 250 m²/g, and an average particle size at most equal to 500 nm, more preferably at most equal to 200 nm. Examples of such reinforcing aluminas are the aluminas A125, CR125, D65CR from Baïkowski or the neutral, acidic, or basic Al₂O₃ that can be obtained from the Aldrich Chemical Company. Neutral alumina is preferred.

Examples of aluminosilicates which can be used in the elastomer compositions of the invention are Sepiolite, a natural aluminosilicate which might be obtained as PANSIL^{®} from Tolsa S.A., Toledo, Spain, and SILTEG^{®}, a synthetic aluminosilicate from Degussa GmbH.

The hydroxyl-containing filler can alternatively be talc, magnesium dihydroxide or calcium carbonate, or a natural organic filler such as cellulose fibre or starch. Mixtures of mineral and organic fillers can be used, as can mixtures of reinforcing and non-reinforcing fillers.

The filler can additionally or alternatively comprise a filler which does not have hydroxyl groups at its surface, for example a reinforcing filler such as carbon black and/or a non-reinforcing filler such as calcium carbonate.

The reaction between the diene elastomer and the unsaturated silane (I) or (II) can be carried out as a batch process or as a continuous process using any suitable apparatus.

Continuous processing can be effected in an extruder such as a single screw or twin screw extruder. The extruder is preferably adapted to mechanically work, that is to knead or compound, the materials passing through it, for example a twin screw extruder. One example of a suitable extruder is that sold under the trade mark ZSK from Coperion Werner Pfeidener. The extruder preferably includes a vacuum port shortly before the extrusion die to remove any unreacted silane. The residence time of the diene elastomer and the unsaturated silane at above 100°C in the extruder or other continuous reactor is generally at least 0.5 minutes and preferably at least 1 minute and can be up to 15 minutes. More preferably the residence time is 1 to 5 minutes.

A batch process can for example be carried out in an internal mixer such as a Banbury mixer or a Brabender Plastograph (Trade Mark) 350S mixer equipped with roller blades. An external mixer such as a roll mill can be used for either batch or continuous processing. In a batch process, the elastomer and the unsaturated silane are generally mixed together at a temperature above 100°C for at least 1 minute and can be mixed for up to 20 minutes, although the time of mixing at high temperature is generally 2 to 10 minutes.

The elastomer compositions are preferably produced using the conventional two successive preparation phases of mechanical or thermo-mechanical mixing or kneading ("non-productive" phase) at high temperature, followed by a second phase of mechanical mixing ("productive" phase) at lower temperature, typically less than 110°C, for example between 40°C - 100°C, during which the cross-linking and vulcanization systems are incorporated.

During the non productive phase, the unsaturated silane, the diene elastomer and the filler are mixed together. Mechanical or thermo-mechanical kneading occurs, in one or more steps, until a maximum temperature of 110°-190°C is reached, preferably between 130°-180°C. When the apparent density of the reinforcing inorganic filler is low (generally the case for silica), it may be advantageous to divide the introduction thereof into two or more parts in order to improve further the dispersion of the filler in the rubber. The total duration of the mixing in this non-productive phase is preferably between 2 and 10 minutes.

Compositions comprising the modified elastomer produced by reaction with the unsaturated silane according to the invention can be cured by various mechanisms. The curing agent for the modified elastomer can be a conventional rubber curing agent such as a sulfur vulcanizing agent. Alternatively the modified elastomer can be cured by a radical initiator such as a peroxide. Alternatively the modified elastomer can be cured by exposure to moisture in the presence of a silanol condensation catalyst. The hydrolysable silane groups grafted onto the elastomer can react with each other to crosslink the elastomer and/or can be further reacted with a polar surface, filler or polar polymer.

For many uses curing by a conventional sulfur vulcanizing agent is preferred. Examples of suitable sulfur vulcanizing agents include, for example, elemental sulfur (free sulfur) or sulfur donating vulcanizing agents, for example, an amine disulfide, polymeric polysulfide or sulfur olefin adducts which are conventionally added in the final, productive, rubber composition mixing step. Preferably, in most cases, the sulfur vulcanizing agent is elemental sulfur. Sulfur vulcanizing agents are used in an amount ranging from about 0.4 to about 8% by weight based on elastomer, preferably 1.5 to about 3%, particularly 2 to 2.5%.

Accelerators are generally used to control the time and/or temperature required for vulcanization and to improve the properties of the vulcanized elastomer composition. In one embodiment, a single accelerator system may be used, i.e., primary accelerator. Conventionally and preferably, a primary accelerator(s) is used in total amounts ranging from about 0.5 to about 4% by weight based on elastomer, preferably about 0.8 to about 1.5%. In another embodiment, combinations of a primary and a secondary accelerator might be used with the secondary accelerator being used in smaller amounts of about 0.05 to about 3% in order to activate and to improve the properties of the vulcanisate. Delayed action accelerators may be used which are not affected by normal processing temperatures but produce a satisfactory cure at ordinary vulcanization temperatures. Vulcanization retarders can also be used, e.g. phthalic anhydride, benzoic acid or cyclohexylthiophthalimide. Suitable types of accelerators that may be used in the present invention are amines, disulfides, guanidines, thioureas, thiazoles, for example mercaptobenzothiazole, thiurams, sulfenamides, dithiocarbamates, thiocarbonates, and xanthates. Preferably, the primary accelerator is a sulfenamide. If a second accelerator is used, the secondary accelerator is preferably a guanidine, dithiocarbamate or thiuram compound.

In case the curing system is composed of sulphur, the vulcanization, or curing, of a rubber product such as a tire or tire tread is carried out in known manner at temperatures preferably between 130°-200°C, under pressure, for a sufficiently long period of time. The required time for vulcanization may vary for example between 2 and 30 minutes.

In one preferred procedure the diene elastomer and the unsaturated silane and possibly the filler are mixed together above 100°C in an internal mixer or extruder.

By way of example, the first (non-productive) phase is effected in a single thermomechanical step during which in a first phase the reinforcing filler, the unsaturated silane and the elastomer are mixed in a suitable mixer, such as a conventional internal mixer or extruder, then in a second phase, for example after one to two minutes' kneading, any complementary covering agents or processing agents and other various additives, with the exception of the vulcanization system, are introduced into the mixer.

A second step of thermomechanical working may be added in this internal mixer, after the mixture has dropped and after intermediate cooling to a temperature preferably less than 100°C, with the aim of making the compositions undergo complementary thermomechanical treatment, in particular in order to improve further the dispersion, in the elastomeric matrix, of the reinforcing inorganic filler. The total duration of the kneading, in this non-productive phase, is preferably between 2 and 10 minutes.

After cooling of the mixture thus obtained, the vulcanization system is then incorporated at low temperature, typically on an external mixer such as an open mill, or alternatively on an internal mixer (Banbury type). The entire mixture is then mixed (productive phase) for several minutes, for example between 2 and 10 minutes.

Any other additives such as a grafting catalyst can be incorporated either in the "non productive" phase or in the productive phase.

The curable rubber composition can contain a coupling agent other than the unsaturated silane, for example a trialkoxy, dialkoxy or monoalkoxy silane coupling agent, particularly a sulfidosilane or mercaptosilane or an azosilane, acrylamidosilane, blocked mercaptosilane, aminosilane alkylsilane or alkenylsilane having 1 to 20 carbon atoms in the alkyl group and 1 to 6 carbon atoms in the alkoxy group. Examples of preferred coupling agents include a bis(trialkoxysilylpropyl)disulfane or tetrasulfane as described in US-A-5684171, such as bis(triethoxysilylpropyl)tetrasulfane or bis(triethoxysilylpropyl)disulfane, or a bis(dialkoxymethylsilylpropyl)disulfane or tetrasulfane such as bis(methyldiethoxysilylpropyl)tetrasulfane or bis(methyldiethoxysilylpropyl)disulfane, or a bis(dimethylethoxysilylpropyl)oligosulfane such as bis(dimethylethoxysilylpropyl)tetrasulfane or bis(dimethylethoxysilylpropyl)disulfane, or a bis(dimethylhydroxysilylpropyl)polysulfane as described in US-B1-6774255, or a dimethylhydroxysilylpropyl dimethylalkoxysilylpropyl oligosulfane as described in WO-A-2007/061550, or a mercaptosilane such as triethoxysilylpropylmercaptosilane. Such a coupling agent promotes bonding of the filler to the organic elastomer, thus enhancing the physical properties of the filled elastomer. The filler can be pre-treated with the coupling agent or the coupling agent can be added to the mixer with the elastomer and filler and the unsaturated silane according to the invention. We have found that use of an unsaturated silane (I) or (II) according to the invention in conjunction with such a coupling agent can reduce the mixing energy required for processing the elastomer composition and improve the performance properties of products formed by curing the elastomer composition compared to compositions containing the coupling agent with no such unsaturated silane.

The curable rubber composition can contain a covering agent other than the unsaturated silane, for example a trialkoxy, dialkoxy or monoalkoxy silane covering agent, particularly n-octyltriethoxysilane or 1-hexadecyltriethoxysilane, or hexamethyldisilazane or a polysiloxane covering agent such as a hydroxyl-terminated polydimethylsiloxane, hydroxyl-terminated polymethylphenylsiloxane, or a linear polyfunctionalsiloxane, or a silicone resin. The covering agent can alternatively be an aryl-alkoxysilane or aryl-hydroxysilane, a tetraalkoxysilane such as tetraethoxysilane, or a polyetherpolyol such as polyethylene glycol, an amine such as a trialkanolamine. The filler can be pre-treated with the covering agent or the coupling agent can be added to the mixer with the elastomer and filler and the unsaturated silane according to the invention. We have found that use of an unsaturated silane (I) or (II) according to the invention in conjunction with such a covering agent can reduce the mixing energy required for processing the elastomer composition and improve the performance properties of products formed by curing the elastomer composition compared to compositions containing the covering agent with no such unsaturated silane.

The elastomer composition can be compounded with various commonly-used additive materials such as processing additives, for example oils, resins including tackifying resins, silicas, and plasticizers, fillers, pigments, fatty acid, zinc oxide, waxes, antioxidants and antiozonants, heat stabilizers, UV stabilizers, dyes, pigments, extenders and peptizing agents.

Typical amounts of tackifier resins, if used, comprise about 0.5 to about 10% by weight based on elastomer, preferably 1 to 5%. Typical amounts of processing aids comprise about 1 to about 50% by weight based on elastomer. Such processing aids can include, for example, aromatic, naphthenic, and/or paraffinic processing oils.

Typical amounts of antioxidants comprise about 1 to about 5% by weight based on elastomer. Representative antioxidants may be, for example, N-1,3- dimethylbutyl-N-phenyl-para-phenylenediamine, sold as "Santoflex 6-PPD" (trade mark) from Flexsys, diphenyl-p-phenylenediamine and others, for example those disclosed in The Vanderbilt Rubber Handbook (1978), Pages 344 through 346. Typical amounts of antiozonants also comprise about 1 to 5% by weight based on elastomer.

Typical amounts of fatty acids, if used, which can include stearic acid or zinc stearate, comprise about 0.1 to about 3% by weight based on elastomer. Typical amounts of zinc oxide comprise about 0 to about 5% by weight based on elastomer alternatively 0.1 to 5%.

Typical amounts of waxes comprise about 1 to about 5% by weight based on elastomer. Microcrystalline and/or crystalline waxes can be used.

Typical amounts of peptizers comprise about 0.1 to about 1 % by weight based on elastomer. Typical peptizers may for example be pentachlorothiophenol or dibenzamidodiphenyl disulfide.

The modified elastomer composition containing a curing agent such as a vulcanizing system is shaped and cured into an article. The elastomer composition can be used to produce tyres, including any part thereof such as the bead, apex, sidewall, inner liner, tread or carcass. The elastomer composition can alternatively be used to produce any other engineered rubber goods, for example bridge suspension elements, hoses, belts, shoe soles, anti seismic vibrators, and dampening elements. The elastomer composition can be cured in contact with reinforcing elements such as cords, for example organic polymer cords such as polyester, nylon, rayon, or cellulose cords, or steel cords, or fabric layers or metallic or organic sheets.

In the case of a passenger car tire, the preferred starting diene elastomer is for example a styrene butadiene rubber (SBR), for example an SBR prepared in emulsion ("ESBR") or an SBR prepared in solution ("SSBR"), or an SBR/BR, SBR/NR (or SBR/IR), alternatively BR/NR (or BR/IR), or SIBR (isoprene-butadiene-styrene copolymers), IBR (isoprene-butadiene copolymers), or blends (mixtures) thereof. In the case of an SBR elastomer, in particular an SBR having a styrene content of between 20% and 30% by weight, a content of vinyl bonds of the butadiene fraction of between 15% and 65%, and a content of trans-1,4 bonds of between 15% and 75% is preferred. Such an SBR copolymer, preferably an SSBR, is possibly used in a mixture with a polybutadiene (BR) having preferably more than 90% cis-1,4 bonds.

In the case of a tyre for a heavy vehicle, the elastomer is in particular an isoprene elastomer; that is an isoprene homopolymer or copolymer, in other words a diene elastomer selected from the group consisting of natural rubber (NR), synthetic polyisoprenes (IR), the various isoprene copolymers or a mixture of these elastomers, which can be referred as isoprenic rubbers. As described in WO2010005525A1 and WO2010003007A2, the isoprene polymer can be produced in a cultured medium converting carbon available in the cell culture medium into isoprene, which is then recovered and polymerized into synthetic rubbers.Of the isoprene copolymers, mention will be made in particular of isobutene-isoprene copolymers (butyl rubber-IIR), isoprene-styrene copolymers (SIR), isoprene-butadiene copolymers (BIR) or isoprene-butadiene-styrene copolymers (SBIR). This isoprene elastomer is preferably natural rubber or a synthetic cis-1,4 polyisoprene; of these synthetic polyisoprenes, preferably polyisoprenes having a content (mole %) of cis-1,4 bonds greater than 90%, more preferably still greater than 98%, are used. For such a tire for a heavy vehicle, the elastomer may also be constituted, in its entirety or in part, of another highly unsaturated elastomer such as, for example, a SBR or a BR elastomer.

When the elastomer composition is for use as a tire sidewall, the elastomer may comprise at least one essentially saturated diene elastomer, in particular at least one EPDM copolymer, which may for example be used alone or in a mixture with one or more of the highly unsaturated diene elastomers.

The modified elastomer composition containing a vulcanizing system can for example be calendered, for example in the form of thin slabs (thickness of 2 to 3 mm) or thin sheets of rubber in order to measure its physical or mechanical properties, in particular for laboratory characterization, or alternatively can be extruded to form rubber profiled elements used directly, after cutting or assembling to the desired dimensions, as a semi-finished product for tires, in particular as treads, plies of carcass reinforcements, sidewalls, plies of radial carcass reinforcements, beads or chaffers, inner tubes or air light internal rubbers for tubeless tires.

As an alternative to curing by a sulfur vulcanizing system, the modified elastomer composition can be cured by a peroxide. Examples are di(tert-butyl)peroxide; t-butylcumyl peroxide; dicumyl peroxide; benzoyl peroxide; 1,1'-di(t-butylperoxy)-3,3,5-trimethylcyclohexane; 2,5-dimethyl-2,5-di(t-butylperoxy)hexyne; 2,5-dimethyl-2,5-di(t-butylperoxy)hexane; α,α'-di(t-butylperoxy)-m/p-diisopropylbenzene; and n-butyl-4,4'-di(tert-butylperoxy)valerate.

This invention relates to the use of activated unsaturated functional silane to graft to diene polymer without any radical initiator to help the grafing. However, vulcanization can still be done using peroxides. Heat or UV radiation can be used to vulcanise the rubber in order to activate the peroxide. Heat activation of the peroxide is the preferred way, for example with temperature from 100 to 200°C for a time comprised between 1 to 90 minutes, preferably 5 to 20 minutes.

A second alternative to sulfur and peroxide cure is the use of the alkoxysilane groups of the obtained grafted polymer. If the grafted elastomer is cross-linked by exposure to moisture in the presence of a silanol condensation catalyst, any suitable condensation catalyst may be used. These include protic acids, Lewis acids, organic and inorganic bases, transition metal compounds, metal salts and organometallic complexes.

Preferred catalysts include organic tin compounds, particularly organotin salts and especially diorganotin dicarboxylate compounds such as dibutyltin dilaurate, dioctyltin dilaurate, dimethyltin dibutyrate, dibutyltin dimethoxide, dibutyltin diacetate, dimethyltin bisneodecanoate, dibutyltin dibenzoate, dimethyltin dineodeconoate or dibutyltin dioctoate. Alternative organic tin catalysts include triethyltin tartrate, stannous octoate, tin oleate, tin naphthate, butyltintri-2-ethylhexoate, tin butyrate, carbomethoxyphenyl tin trisuberate and isobutyltin triceroate. Organic compounds, particularly carboxylates, of other metals such as lead, antimony, iron, cadmium, barium, manganese, zinc, chromium, cobalt, nickel, aluminium, gallium or germanium can alternatively be used.

The condensation catalyst can alternatively be a compound of a transition metal selected from titanium, zirconium and hafnium, for example titanium alkoxides, otherwise known as titanate esters of the general formula Ti[OR⁵]₄ and/or zirconate esters Zr[OR⁵]₄ where each R⁵ may be the same or different and represents a monovalent, primary, secondary or tertiary aliphatic hydrocarbon group which may be linear or branched containing from 1 to 10 carbon atoms. Preferred examples of R⁵ include isopropyl, tertiary butyl and a branched secondary alkyl group such as 2,4-dimethyl-3-pentyl. Alternatively, the titanate may be chelated with any suitable chelating agent such as acetylacetone or methyl or ethyl acetoacetate, for example diisopropyl bis(acetylacetonyl)titanate or diisopropyl bis(ethylacetoacetyl)titanate.

The condensation catalyst can alternatively be a protonic acid catalyst or a Lewis acid catalyst. Examples of suitable protonic acid catalysts include carboxylic acids such as acetic acid and sulphonic acids, particularly aryl sulphonic acids such as dodecylbenzenesulphonic acid. A "Lewis acid" is any substance that will take up an electron pair to form a covalent bond, for example, boron trifluoride, boron trifluoride monoethylamine complex, boron trifluoride methanol complex, boron triacetate, metal alkoxide (e.g. Al(OEt)₃, Al(OiPr)₃), NaF, FeCl₃, AlCl₃, ZnCl₂, ZnBr₂ or catalysts of formula MR⁴ _{f}X_{g} where M is B, Al, Ga, In or Tl, each R⁴ is independently the same or different and represents a monovalent aromatic hydrocarbon radical having from 6 to 14 carbon atoms, such monovalent aromatic hydrocarbon radicals preferably having at least one electron-withdrawing element or group such as -CF₃, -NO₂ or -CN, or substituted with at least two halogen atoms; X is a halogen atom; f is 1, 2, or 3; and g is 0, 1 or 2; with the proviso that f+g =3. One example of such a catalyst is B(C₆F₅)₃.

An example of a base catalyst is an amine or a quaternary ammonium compound such as tetramethylammonium hydroxide, or an aminosilane. Amine catalysts such as laurylamine can be used alone or can be used in conjunction with another catalyst such as a tin carboxylate or organotin carboxylate.

The silane condensation catalyst is typically used at 0.005 to 1.0% by weight based on the modified diene elastomer. For example a diorganotin dicarboxylate is preferably used at 0.01 to 0.1 % by weight based on the elastomer.

When curing a modified diene elastomer by exposure to moisture, the modified elastomer is preferably shaped into an article and subsequently cross-linked by moisture. In one preferred procedure, the silanol condensation catalyst can be dissolved in the water used to crosslink the grafted polymer. For example an article shaped from grafted polyolefin can be cured by water containing a carboxylic acid catalyst such as acetic acid, or containing a diorganotin carboxylate.

Alternatively or additionally, the silanol condensation catalyst can be incorporated into the modified elastomer before the modified elastomer is shaped into an article. The shaped article can subsequently be cross-linked by moisture. The catalyst can be mixed with the diene elastomer before, during or after the grafting reaction.

A silanol condensation catalyst can be used in addition to other curing means such as vulcanization by sulphur. In this case, the silanol condensation catalyst can be incorporated either in the "non productive" phase or in the productive phase of the preferred vulcanization process described above.

When curing is done using alkoxysilane groups of the grafted elastomer, care should be taken when forming a cured elastomer article to avoid exposure of the silane and catalyst together to moisture, or of the composition of silane-modified elastomer and catalyst to moisture before its final shaping into the desired article.

The modified diene elastomer according to the invention has improved adhesion both to fillers mixed with the elastomer and silane during the grafting reaction and to substrates to which the modified diene elastomer is subsequently applied. Improved adhesion to fillers results in better dispersion of the fillers during compounding. Substrates to which the modified diene elastomer is applied include metal cords and fabrics and organic polymer cords and fabrics which are incorporated into the structure of a finished article, for example a tyre, made from the modified diene elastomer. Improved adhesion to such substrates leads to a finished article having improved mechanical and wear properties.

The ability of the unsaturated silanes of the invention to react with a diene elastomer in the absence of any free radical initiator allows formation of a modified elastomer, especially modified natural rubber, without polymer degradation, leading to improved rubber performance, for example improved mechanical properties and/or resistance to thermal degradation, compared to a diene elastomer grafted in the presence of a free radical initiator such as peroxide. When the modified elastomer is used to manufacture tire treads, improved mechanical properties can give improved tyre properties such as decreased rolling resistance, better tread wear and improved wet skid performance.

The invention is illustrated by the following Examples in which parts and percentages are by weight

### Examples 1 and 2

Natural rubber was reacted with an unsaturated silane in the presence of silica filler using the formulations, in parts per hundred parts of rubber (parts), shown in Table 1 from the following ingredients:
- NR SVR 10, CV60 - Natural rubber Standard Vietnamese Rubber, purity grade 10, Constant viscosity (CV) 60 m.u. (Mooney unit)
- Silica - Zeosil^{®} 1165MP from Rhodia
- Silane 1 - Acryloxypropyltrimethoxysilane
- Silane 2 - This silane was made from acryloxypropyltrimethoxysilane by a direct exchange of methoxy to ethoxy with ethanol. The composition obtained was: Acryloxypropyltrimethoxysilane (3.4%), Acryloxypropylethoxydimethoxysilane (39.8%), Acryloxypropylmethoxydiethoxysilane (48.25%), Acryloxypropyltriethoxysilane (5.95%). The composition was determined by GC equipped with FID detector. Rest of the compound is composed of polycondensation (< 3%) of those species and impurities from pure Acryloxypropyltrimethoxysilane (< 2%).
- ACST - Stearic Acid
- ZnO - Zinc Oxide
- 6PPD - N-1,3- dimethylbutyl-N-phenyl-para-phenylenediamine ("Santoflex^{®} 6-PPD")
- S - Elemental sulfur
- CBS - N-cyclohexyl-2-benzothiazyl sulfenamide ("Santocure^{®} CBS" from Flexsys)
- N234 and N330 - Conventional Carbon Black according to ASTM D1765

In a comparative example C1, the natural rubber was compounded with carbon black without silica or silane in a conventional tyre tread formulation.

In example 1 and 2, a small amount of carbon Black is incorporated to benefit from its protective action. Silica content for example 1 and 2 is then determined to keep total filler volume fraction (including carbon black and silica) constant compared to comparative example 1.

**Table 1**

| Example | 1 | 2 | C1 |
|---|---|---|---|
| Ingredients | parts | Parts | parts |
| NR SVR 10 - CV 60 | 100.0 | 100.0 | 100.0 |
| Silica - Z1165MP | 50.0 | 50.0 | 0.0 |
| Silane 1 (comparative) | 0.0 | 5.5 | 0.0 |
| Silane 2 | 5.3 | 0.0 | 0.0 |
| Carbon black N234 | 0.0 | 0.0 | 45.0 |
| ACST | 2.5 | 2.5 | 2.5 |
| ZnO | 3.0 | 3.0 | 3.0 |
| 6PPD | 2.0 | 2.0 | 2.0 |
| Carbon black N330 | 3.0 | 3.0 | 0.0 |
| S | 1.5 | 1.5 | 1.5 |
| CBS | 1.8 | 1.8 | 1.0 |

The compounding of the natural rubber, filler and silane (non-productive phase) was carried out using thermomechanical kneading in a Banbury mixer. The procedure was as shown in Table 2, which indicates the time of addition of various ingredients and the estimated temperature of the mixture at that time measured with the internal thermocouple from the mixer. The temperature at the end of mixing was measured inside the rubber after dumping it from the mixer.

**Table 2**

| Time in seconds | 0 | 30 | 60 | 120 | 360 |
|---|---|---|---|---|---|
| Ingredient | Natural rubber | 2/3 Filler (+ silane) | 1/3 filler | Stearic acid ZnO 6PPD | End mixing |
| Mixer internal probe indicative temperature (°C) | 80 | 90 | 100 | 120 | 150-160 |

The modified natural rubber composition thus produced was milled on a two-roll mill at a temperature of about 70 °C during which milling the curing agents were added (productive phase). The mixing procedure for the productive phase is shown in Table 3.

**Table 3**

| 2 roll mill process step | Number of passes | Roll distance (mm) | Time/action |
|---|---|---|---|
| Heating up rubber | 5 | 4.0 | NA |
| | 1 | 3.5 | NA |
| | 1 | 3.0 | NA |
| | 1 | 2.5 | NA |
| Mixing rubber and additives | NA | 2-2.4 | Form a mantle around one roll |
| | | | add curing additives within 2.0 minutes |
| | | | cut and turn sheet regularly |
| | | | Stop after 6.0 minutes |
| Sheet formation | 3 | 2.5 | roll up |
| | 2 | 5.1 | Roll on first pass 3-ply for second |
| | 1 | 2.3-2.5 | For final sheet for cutting, moulding and curing |

The modified rubber sheet produced was tested as follows. The results of the tests are shown in Table 4 below.

The rheometry measurements were performed at 160°C using an oscillating chamber rheometer (i.e. Advanced Plastics Analyser) in accordance with Standard ISO 3417:1991 (F). The change in rheometric torque over time describes the course of stiffening of the composition as a result of the vulcanization reaction. The measurements are processed in accordance with Standard ISO 3417:1991 (F). Minimum and maximum torque values, measured in deciNewtonmeter (dNm) are respectively denoted ML and MH time at α% cure (for example 5%) is the time necessary to achieve conversion of α% (for example 5%) of the difference between the minimum and maximum torque values. The difference, denoted MH-ML, between minimum and maximum torque values is also measured. In the same conditions the scorching time for the rubber compositions at 160°C is determined as being the time in minutes necessary to obtain an increase in the torque of 2 units, above the minimum value of the torque ('Time@2dNm scorch S').

The tensile tests were performed in accordance with ISO Standard ISO37:1994(F) using tensile specimen ISO 37 - type 2. The nominal stress (or apparent stresses, in MPa) at 10% elongation (M10), 100% elongation (M100) and elongation (M250 or M300) are measured at 10%, 100% and 250% or 300% of elongation. Breaking stresses (in MPa) are also measured. Elongation at break (in %) was measured according to Standard ISO 37. High values of Elongation at break are preferred. Preferably the Elongation at break is at least 300%. All these tensile measurements are performed under normal conditions of temperature and relative humidity in accordance with ISO Standard ISO 471. The ratio of M300 to M100 correlates with tread wear resistance of a tyre made from the rubber composition, with an increase in M300/M100 ratio indicating potential better tread wear resistance.

The dynamic properties were measured on a viscoanalyser (Metravib VA4000), in accordance with ASTM Standard D5992-96.
- Strain sweep: The response of a sample of vulcanized composition (thickness of 2.5 mm and a cross-section of 40 mm²), subjected to an alternating single sinusoidal shearing stress, at a frequency of 10 Hz, under a controlled temperature of 55° C is recorded. Scanning is performed at amplitude of deformation of 0.1 to 50% the maximum observed value of the loss factor tan d is recorded, the value being denoted tan δ 6%. The tan δ 6% value is well correlated to the rolling resistance of the tire, the lower the tan δ 6% the lower the rolling resistance is, the better the tire performance will be. G'₀ is the elastic modulus measured at very low strain, when the behaviour is linear with the stress: G'ₘₐₓ is the elastic modulus at 50% strain. Dynamical properties have been recorded after a first strain sweep (G'₀) from 0.1 to 50%, then the second strain sweep from 50% to 0.1% has been also recorded. The difference between the modulus at first strain sweep and the modulus after the return to low strain (G'₀ return) is denoted ΔG'₀ which is well correlated to the handling stability of the tire under stress. The difference between G'o return and G'ₘₐₓ after the second strain sweep is denoted ΔG' return. The tan δ 6%, second strain sweep value corresponds to the maximum of the loss factor tan (δ) during the second strain sweep. A reduction in both tan δ 6% and tan δ 6%, second strain sweep is well correlated to a decrease in the rolling resistance of a tire manufactured from the rubber composition.
- Temperature sweep: The response of a sample of vulcanized composition (thickness of 2.5 mm, height of 14 mm and length of 4.0 mm), subjected to an alternating single sinusoidal shearing stress, at a frequency of 10 Hz, under a controlled displacement of 1.25 micron. The sample is placed at room temperature and cooled down to -100°C with a rate of 5°C/min. The temperature is then stabilised at -100°C for 20 minutes to allow the sample to be at an equilibrium temperature state. The temperature is then increased up to 100°C at a rate of 5°C/min. The loss factor and the stiffness, giving the modulus and the tan(δ). The tan δₘₐₓ and/or the value at 0°C (tan δ_{0°C}) is related to the wet skid performances. An increase in the tan δₘₐₓ and in the tan(δ) value at 0°C (tan δ_{0°C}) is indicative of improved wet skid performance.

The Shore A hardness was measured according to ASTM D2240-02b.

**Table 4**

| Example | 1 | 2 (Comparative) | C1 |
|---|---|---|---|
| Mooney Viscosity @100°C | | | |
| Mmax (m.u.) | 73 | 77 | 72 |
| ML1+4 (m.u.) | 53 | 56 | 58 |
| Rheometer @160°C | | | |
| ML (dNm) | 1.8 | 1.8 | 1.8 |
| MH (dNm) | 16.5 | 17.4 | 16.0 |
| MH-ML (dNm) | 14.7 | 15.5 | 14.2 |
| Time@5% cure S' (min) | 2.8 | 2.8 | 2.5 |
| Time@95% cure S' (min) | 11.2 | 10.9 | 6.7 |
| Time@2 dNm scorch S' (min) | 4.8 | 4.6 | 3.4 |

| Dynamic properties, strain sweep @55°C, simple shear | | | |
|---|---|---|---|
| G' ₀ (Pa) | 4.43 | 4.19 | 5.81 |
| G'_{0 return} (Pa) | 3.63 | 3.46 | 5.02 |
| ΔG' ₀ (Pa) | 0.80 | 0.73 | 0.79 |
| G'ₘₐₓ (Pa) | 1.21 | 1.23 | 1.18 |
| ΔG' (Pa) | 3.22 | 2.96 | 4.63 |
| Tan δ 6% | 0.121 | 0.118 | 0.180 |
| Tan δ 6%, second strain sweep | 0.127 | 0.128 | 0.189 |

| Dynamic properties, T°C sweep | | | |
|---|---|---|---|
| Tan δ _{0°C}, | 0.133 | 0.135 | 0.117 |
| Tan δ _{30°C} | 0.076 | 0.078 | 0.080 |
| Tan δ _{55°C} | 0.060 | 0.061 | 0.077 |
| Tan δ _{70°C} | 0.058 | 0.061 | 0.078 |
| Tan δ ₘₐₓ | 0.956 | 0.947 | 0.857 |

| Physical properties | | | |
|---|---|---|---|
| M10 (MPa) | 0.7 | 0.7 | 0.7 |
| M100 (MPa) | 3.1 | 3.2 | 3.4 |
| M250 (Mpa) | 12.1 | 12.6 | 13.0 |
| M300 (MPa) | 16.0 | 16.7 | 17.0 |
| M250/M100 | 3.9 | 3.9 | 3.8 |
| M300/M100 | 5.2 | 5.2 | 5.0 |
| Stress at break (MPa) | 29.5 | 28.0 | 28.8 |
| Elongation at break (%) | 493 | 457 | 470 |
| Shore A | 57.4 | 57.9 | 57.1 |

The viscosity and Shore A hardness of the compositions of Examples 1 and 2 are similar to that of comparative example C1, as required for tyre application.

The strain sweep results for Examples 1 and 2 show a reduction in the Tanδ 6%, second strain sweep compared to comparative example C1. This is associated with a decrease of the rolling resistance of a tyre made from the rubber composition.

The results of tan δₘₐₓ value during the temperature sweep for Examples 1 and 2 is increased compared to comparative example C1, indicating improved wet skid performance of tyres made from the rubber compositions of Examples 1 and 2.

In the physical properties, the M300/M100 ratio for Examples 1 and 2 is increased compared to comparative example C1 keeping similar elongation and stress at break, leading to a potential better tread wear resistance.

### Examples 3 and 4

Following the procedure of Example 1, modified rubber compositions were prepared from the formulations shown in Table 5 below, in which the ingredients are as stated in Example 1 and:
Silane 3 - bis-(trimethoxysilylpropyl)-fumarate

Two comparative examples were also carried out. Comparative example C2 was similar to C1 with a slight difference in the 6PPD level. Comparative Example C3 repeats Examples 3 and 4 using methacryloxypropyltrimethoxysilane (Silane 4) in place of the silanes of Examples 3 and 4. The amounts of silane used in Examples 3 and 4 and C3 is calculated to give the same molar amount of alkoxysilane groups in each example.

**Table 5**

| Example | C2 | 3 (comparative) | 4 | C3 |
|---|---|---|---|---|
| Ingredients | parts | parts | parts | Parts |
| NR SVR 10-CV60 | 100.0 | 100.0 | 100.0 | 100.0 |
| Silica-Z1165MP | 0.0 | 50.0 | 50.0 | 50.0 |
| Silane 3 | 0.0 | 4.6 | 0.0 | 0.0 |
| Silane 1 | 0.0 | 0.0 | 5.0 | 0.0 |
| Silane 4 | 0.0 | 0.0 | 0.0 | 5.2 |
| Carbon black N330 | 0.0 | 3.0 | 3.0 | 3.0 |
| Carbon black N234 | 45.0 | 0.0 | 0.0 | 0.0 |
| ACST | 2.5 | 2.5 | 2.5 | 2.5 |
| ZnO | 3.0 | 3.0 | 3.0 | 3.0 |
| 6PPD | 1.9 | 1.9 | 1.9 | 1.9 |
| S | 1.5 | 1.5 | 1.5 | 1.5 |
| CBS | 1.0 | 1.8 | 1.8 | 1.8 |

The modified rubber compositions of Examples 3 and 4 and comparative examples C2 and C3 were tested similarly to Examples 1 and 2. The results are shown in Table 6.

**Table 6**

| Example | C2 | 3 | 4 | C3 |
|---|---|---|---|---|
| Mooney Viscosity @ 100°C | | | | |
| Mmax (m.u.) | 68 | 73 | 83 | 53 |
| ML1+4 (m.u.) | 51 | 48 | 47 | 37 |

| Rheometer @160°C | | | | |
|---|---|---|---|---|
| ML (dNm) | 1.7 | 1.7 | 1.6 | 1.3 |
| MH (dNm) | 16.9 | 19.9 | 18.3 | 16.1 |
| MH-ML (dNm) | 15.2 | 18.2 | 16.8 | 14.8 |
| Time@5% cure S' (min) | 2.5 | 2.7 | 2.8 | 2.8 |
| Time@95% cure S' (min) | 7.0 | 13.8 | 11.5 | 13.2 |
| Time@2 dNm scorch S' (min) | 3.5 | 4.3 | 4.6 | 5.5 |

| Dynamic properties, strain sweep @55°C, simple shear | | | | |
|---|---|---|---|---|
| G' 0 (Pa) | 5.96 | 6.05 | 5.07 | 4.76 |
| G'0 return (Pa) | 4.65 | 4.91 | 3.98 | 4.01 |
| ΔG' 0 (Pa) | 1.30 | 1.14 | 1.09 | 0.75 |
| G'max (Pa) | 1.09 | 1.18 | 1.19 | 1.03 |
| ΔG' (Pa) | 4.86 | 4.87 | 3.88 | 3.73 |
| tan δ□6% | 0.202 | 0.161 | 0.154 | 0.162 |
| tan δ 6%, second strain sweep | 0.216 | 0.172 | 0.162 | 0.162 |

| Dynamic properties, T°C sweep | | | | |
|---|---|---|---|---|
| Tan δ 0°C | 0.131 | 0.128 | 0.146 | 0.157 |
| Tan δ 30°C | 0.095 | 0.080 | 0.096 | 0.098 |
| Tan δ 55°C | 0.094 | 0.071 | 0.077 | 0.088 |
| Tan δ 70°C | 0.093 | 0.073 | 0.080 | 0.091 |
| Tan δ max | 0.888 | 0.890 | 0.888 | 0.867 |

| Physical properties | | | | |
|---|---|---|---|---|
| M10 (MPa) | 0.7 | 0.7 | 0.7 | 0.6 |
| M100 (MPa) | 3.0 | 3.2 | 3.0 | 2.2 |
| M250 (Mpa) | 11.5 | 12.4 | 11.8 | 8.3 |
| M300 (MPa) | 15.3 | 16.3 | 15.8 | 11.5 |
| M250/M 100 | 3.8 | 3.8 | 4.0 | 3.8 |
| M300/M100 | 5.1 | 5.0 | 5.3 | 5.2 |
| Stress at break (MPa) | 29.5 | 26.8 | 29.9 | 29.4 |
| Elongation at break (%) | 507 | 439 | 483 | 553 |
| Shore A | 54.1 | 59.6 | 56.6 | 53.2 |

As required by the application the shore A hardness and the Mooney viscosity (ML1+4) are the required range for example 3 and 4 compared to comparative example C2.

In the physical properties, the M300 value for Examples 3 and 4 is higher than that of comparative example C2, indicating enough reinforcement to get a good wear performance of tyre treads made from these rubber compositions. The M300/M100 ratio of Example 4 is increased compared to Example C2, leading to a potential better tread wear resistance.

Examples 3 and 4 also have the advantage of a lower tan δ 6%, second strain compared to Example C2, leading to lower rolling resistance of the obtained tread.

Example C3 shows a low value of M300 and a low ML1 +4 Mooney viscosity, indicating that methacryloxypropyltrimethoxysilane without radical initiator is less effective than acryloxypropyltrimethoxysilane in dispersing silica in the rubber matrix, leading to poorer wear performances.

### Example 5

Following the procedure of Example 1, modified rubber compositions were prepared from the formulations shown in Table 7 below, in which the ingredients are as stated in Example 1 and:
- Silane 5 - bis-(triethoxysilylpropyl)-tetrasulfane
- Silane 6 - This silane was made from acryloxymethyltrimethoxysilane by a direct exchange of methoxy to ethoxy with ethanol. The composition obtained was: acryloxymethylethoxydimethoxysilane (2.8%), acryloxymethylmethoxydiethoxysilane (29.6%), acryloxymethyltriethoxysilane (59.2%). The composition was determined by GC equipped with FID detector. Rest of the compound is composed of polycondensation (< 7%) of those species and impurities from pure acryloxymethyltrimethoxysilane (<1 %). Initial silane, acryloxymethyltrimethoxysilane represents less than 0.2% of the sample.

Three comparative examples were carried out. Comparative example C2a was similar to C2. Comparative Example C4 is a comparative example based on Composition No. 4 of WO01/49781-A1 and US2004/0249048-A1. Comparative example C4 contains methacryloxypropyltrimethoxysilane in the presence of a radical initiator whereas in C3 no radical initiator was present. The amount of methacryloxypropyltrimethoxysilane is based on silane quantity of example 5 to use same molar content of rubber reactive functions.

**Table 7**

| Example | C2a | 5 | C4 |
|---|---|---|---|
| Ingredients | parts | parts | parts |
| NR SVR 10 - CV60 | 100.0 | 100.0 | 100.0 |
| Silica - Z1165MP | 0.0 | 50.0 | 50.0 |
| Carbon black N234 | 45.0 | 0.0 | 0.0 |
| Silane 5 | 0.0 | 0.0 | 0.0 |
| Silane 6 | 0.0 | 0.0 | 0.0 |
| Silane 1 | 0.0 | 5.5 | 0.0 |
| Silane 4 | 0.0 | 0.0 | 5.8 |
| Luperox 230XL40 | 0.0 | 0.0 | 0.4 |
| ACST | 2.5 | 2.5 | 2.5 |
| ZnO | 3.0 | 3.0 | 3.0 |
| 6PPD | 1.9 | 1.9 | 1.9 |
| Carbon black N330 | 0.0 | 3.0 | 3.0 |
| S | 1.5 | 1.5 | 1.5 |
| CBS | 1.0 | 1.8 | 1.8 |

The modified rubber compositions of Examples 5 and comparative examples C2a, C4 were tested similarly to Examples 1 and 2. The results are shown in Table 8.

**Table 8**

| Example | C2a | 5 | C4 |
|---|---|---|---|
| Mooney Viscosity @100°C | | | |
| Mmax (m.u.) | 62 | 71 | 66 |
| ML1 +4 (m.u.) | 50 | 51 | 46 |
| Rheometer @160°C | | | |
| ML (dNm) | 2 | 1.7 | 1.5 |
| MH (dNm) | 16.3 | 17.1 | 15.5 |
| MH-ML (dNm) | 14.3 | 15.4 | 14.0 |
| Time@5% cure S' (min) | 2.7 | 2.9 | 2.9 |
| Time@95% cure S' (min) | 6.9 | 11.2 | 11.8 |
| Time@2 dNm scorch S' (min) | 3.4 | 5.0 | 5.4 |

| Dynamic properties, strain sweep @55°C, simple shear | | | |
|---|---|---|---|
| G'₀ (Pa) | 6.04 | 5.09 | 3.48 |
| G'_{0 return} (Pa) | 5.26 | 4.02 | 3.00 |
| ΔG' ₀ (Pa) | 0.78 | 1.08 | 0.48 |
| G'ₘₐₓ (Pa) | 1.13 | 1.23 | 1.09 |
| ΔG' (Pa) | 4.91 | 3.85 | 2.38 |
| tan δ□6□% | 0.199 | 0.146 | 0.135 |
| tan 6%, second strain sweep | 0.205 | 0.153 | 0.132 |

| Dynamic properties, T°C sweep | | | |
|---|---|---|---|
| Tan δ _{0°C} | 0.122 | 0.143 | 0.155 |
| Tan δ _{30°C} | 0.087 | 0.088 | 0.088 |
| Tan δ _{55°C} | 0.088 | 0.073 | 0.077 |
| Tan δ _{70°C} | 0.087 | 0.071 | 0.074 |
| Tan δ□ₘₐₓ | 0.848 | 0.922 | 0.961 |

| Physical properties | | | |
|---|---|---|---|
| M10 (MPa) | 0.7 | 0.7 | 0.5 |
| M100 (MPa) | 3.1 | 3.1 | 2.6 |
| M250 (Mpa) | 12.0 | 12.7 | 11.5 |
| M300 (MPa) | 15.8 | 16.7 | 15.7 |
| M250/M 100 | 3.9 | 4.0 | 4.4 |
| M300/M 100 | 5.1 | 5.3 | 6.0 |
| Stress at break (MPa) | 28.0 | 28.1 | 29.4 |
| Elongation at break (%) | 480 | 447 | 473 |
| Shore A | 57.6 | 57.3 | 54.1 |

As required by the application the shore A hardness and the Mooney viscosity (ML1 +4) are the required range for example 5 compared to comparative example C2a.

The improvement achieved for example 5 and comparative example C4 compared to comparative example C1 are improved rolling resistance (based on tan δ 6%, second strain), wet grip (based on tan δ ₘₐₓ) and possibly wear based on M300/M100 and stress at break values.

Using □-acryloxypropyltrimethoxysilane without radical initiator we were able to achieve similar improved performances avoiding the peroxides. This is a clear advantage for safety and/or handling issues and possible rubber degradation at industrial scale.

### Example 6

Following the procedure of Example 1, modified rubber compositions were prepared from the formulations shown in Table 9 below, in which the ingredients are as stated in Example 1 and:
- Silane 5 - bis-(triethoxysilylpropyl)-tetrasulfane
- Silane 6 - This silane was made from acryloxymethyltrimethoxysilane by a direct exchange of methoxy to ethoxy with ethanol. The composition obtained was: acryloxymethylethoxydimethoxysilane (2.8%), acryloxymethylmethoxydiethoxysilane (29.6%), acryloxymethyltriethoxysilane (59.2%). The composition was determined by GC equipped with FID detector. Rest of the compound is composed of polycondensation (< 7%) of those species and impurities from pure acryloxymethyltrimethoxysilane (<1%). Initial silane, acryloxymethyltrimethoxysilane represents less than 0.2% of the sample.

C5 is a comparative example using bis(triethoxysilylpropyl)tetrasulfane (Silane 5) as a comparative for example 6. Silane 6 in example 6 was added on top of the C5 formulation to see if unsaturated functional silane can improve the performance of such a formulation.

**Table 9**

| Example | 6 | C5 |
|---|---|---|
| Ingredients | parts | Parts |
| NR SVR 10 - CV60 | 100.0 | 100.0 |
| Silica - Z1165MP | 50.0 | 50.0 |
| Carbon black N234 | 0.0 | 0.0 |
| Silane 5 | 4.0 | 4.0 |
| Silane 6 | 1.4 | 0.0 |
| Silane 1 | 0.0 | 0.0 |
| Silane 4 | 0.0 | 0.0 |
| Luperox 230XL40 | 0.0 | 0.0 |
| ACST | 2.5 | 2.5 |
| ZnO | 3.0 | 3.0 |
| 6PPD | 1.9 | 1.9 |
| Carbon black N330 | 3.0 | 3.0 |
| S | 1.5 | 1.5 |
| CBS | 1.8 | 1.8 |

The modified rubber compositions of Examples 6 and comparative examples C5 were tested similarly to Examples 1 and 2. The results are shown in Table 10.

**Table 10**

| Example | 6 | C5 |
|---|---|---|
| Mooney Viscosity @100°C | | |
| Mmax (m.u.) | 70 | 69 |
| ML1+4 (m.u.) | 45 | 46 |
| Rheometer @160°C | | |
| ML (dNm) | 1.6 | 1.7 |
| MH (dNm) | 15.7 | 15.7 |
| MH-ML (dNm) | 14.2 | 14.0 |
| Time@5% cure S' (min) | 3.2 | 3.0 |
| Time@95% cure S' (min) | 9.6 | 8.7 |
| Time@2 dNm scorch S' (min) | 4.6 | 4.4 |

| Dynamic properties, strain sweep @55°C, simple shear | | |
|---|---|---|
| G'₀ (Pa) | 3.65 | 3.98 |
| G'_{0 return} (Pa) | 3.07 | 3.22 |
| ΔG' ₀ (Pa) | 0.59 | 0.77 |
| G' ₘₐₓ (Pa) | 1.17 | 1.13 |
| ΔG' (Pa) | 2.48 | 2.86 |
| tan δ □6□% | 0.137 | 0.148 |
| tan δ 6%, second strain sweep | 0.141 | 0.152 |

| Dynamic properties, T°C sweep | | |
|---|---|---|
| Tan δ _{0°C} | 0.142 | 0.143 |
| Tan δ _{30°C} | 0.090 | 0.094 |
| Tan δ _{55°C} | 0.076 | 0.084 |
| Tan δ _{70°C} | 0.076 | 0.085 |
| Tan δ ₘₐₓ | 0.988 | 0.973 |

| Physical properties | | |
|---|---|---|
| M10 (MPa) | 0.6 | 0.6 |
| M100 (MPa) | 2.9 | 2.6 |
| M250 (Mpa) | 10.7 | 9.4 |
| M300 (MPa) | 14.0 | 12.4 |
| M250/M100 | 3.7 | 3.6 |
| M300/M100 | 4.8 | 4.7 |
| Stress at break (MPa) | 27.3 | 27.2 |
| Elongation at break (%) | 511 | 540 |
| Shore A | 55.5 | 54.9 |

As required by the application the shore A hardness and the Mooney viscosity (ML1+4) are the required range for example 6.

The addition of acryloxymethyltrialkoxysilane lead to decrease the value of tan δ 6%, second strain. This is associated with a decrease of the rolling resistance of a tyre made thereof.

The addition of acryloxymethyltrialkoxysilane lead to increase of the M300 and the reinforcing index (M300/M100) showing a better reinforcing capacity of the filler/silane association and possible better wear performances.

### Example 7, 8 and 9

Following the procedure of Example 1, modified rubber compositions were prepared from the formulations shown in Table 11 below, in which the ingredients are as stated in Example 1 and:
- Silane 7 - acryloxypropyltriethoxysilane
- Silane 8 - bis(triethoxysilylpropyl)-fumarate
- Silane 9 - acryloxymethyltriethoxysilane

Comparative example C2b was similar to C2.

The modified rubber compositions of Examples 7 to 8 and comparative examples C2b were tested similarly to Examples 1 and 2. The results are shown in Table 12

**Table 11**

| Example | C2b | 7 | 8 | 9 |
|---|---|---|---|---|
| Ingredients | parts | parts | parts | Parts |
| NR SVR 10 - CV60 | 100.0 | 100.0 | 100.0 | 100.0 |
| Silica - Z1165MP | 0.0 | 50.0 | 50.0 | 50.0 |
| Carbon black N234 | 45.0 | 0.0 | 0.0 | 0.0 |
| Silane 7 | 0.0 | 4.1 | 0.0 | 0.0 |
| Silane 8 | 0.0 | 0.0 | 3.9 | 0.0 |
| Silane 9 | 0.0 | 0.0 | 0.0 | 3.8 |
| ACST | 2.5 | 2.5 | 2.5 | 2.5 |
| ZnO | 3.0 | 3.0 | 3.0 | 3.0 |
| 6PPD | 2.0 | 2.0 | 2.0 | 2.0 |
| Carbon black N330 | 0.0 | 3.0 | 3.0 | 3.0 |
| S | 1.5 | 1.5 | 1.5 | 1.5 |
| CBS | 1.0 | 1.75 | 1.8 | 1.75 |
| DPG | 0.0 | 1.0 | 0.0 | 1.0 |

**Table 12**

| | | | | |
|---|---|---|---|---|
| | C2B | 7 | 8 | 9 |

| Mooney Viscosity @100°C | | | | |
|---|---|---|---|---|
| Mmax (m.u.) | 77 | 77 | 85 | 89 |
| ML1+4 (m.u.) | 60 | 56 | 60 | 60 |
| Rheometer @160°C | | | | |
| ML (dNm) | 2,0 | 1,8 | 2,1 | 2,0 |
| MH (dNm) | 15,5 | 16,3 | 17,6 | 15,2 |
| Tome@5% cure S' (min) | 2,8 | 3,1 | 2,5 | 3,1 |
| Time@95% cure S' (min) | 6,4 | 6,0 | 6,1 | 6,2 |
| Time@2 dNm scorch S' (min) | 3,5 | 3,7 | 3,3 | 4,0 |
| MH-ML (dNm) | 13,5 | 14,5 | 15,6 | 13,2 |

| Dynamic properties, strain sweep @55°C, simple shear | | | | |
|---|---|---|---|---|
| G'₀ (Pa) | 5,86 | 3,68 | 5,50 | 3,19 |
| G' _{0 return} (Pa) | 5,03 | 3,17 | 4,67 | 2,66 |
| ΔG' ₀ (Pa) | 0,828 | 0,513 | 0,828 | 0,531 |
| G'ₘₐₓ (Pa) | 1,166 | 1,239 | 1,221 | 1,149 |
| ΔG' (Pa) | 4,694 | 2,443 | 4,281 | 2,043 |
| Tan δ 6%□ | 0,184 | 0,124 | 0,160 | 0,118 |
| Tan δ 6%, second strain sweep | 0,191 | 0,123 | 0,166 | 0,116 |

| Dynamic properties, T°C sweep | | | | |
|---|---|---|---|---|
| Tan δ _{0°C} | 0,122 | 0,136 | 0,123 | 0,136 |
| Tan δ _{30°C} | 0,087 | 0,071 | 0,079 | 0,074 |
| Tan δ _{55°C} | 0,082 | 0,062 | 0,075 | 0,063 |
| Tan δ _{70°C} | 0,083 | 0,063 | 0,078 | 0,067 |
| Tan δ ₘₐₓ | 0,841 | 1,027 | 0,858 | 1,025 |

| Physical properties | | | | |
|---|---|---|---|---|
| M10 (MPa) | 0,7 | 0,6 | 0,7 | 0,6 |
| M100 (MPa) | 3,6 | 3,8 | 3,6 | 3,5 |
| M250 (Mpa) | 13,9 | 16,0 | 14,3 | 14,9 |
| M300 (MPa) | 18,1 | 20,7 | 18,3 | 19,3 |
| M250/M100 | 3,9 | 4,3 | 4,0 | 4,3 |
| M300/M100 | 5,1 | 5,5 | 5,1 | 5,6 |
| Tensile break (MPa) | 31,5 | 30,6 | 30,3 | 31,3 |
| Elong max (%) | 493 | 429 | 470 | 464 |

As required by the application the Mooney viscosity (ML1+4) is the required range for examples 7, 8 and 9.

The addition of silane 7, 8 and 9 lead to decrease the value of tan δ 6%, second strain compared to comparative example C2b. This is associated with a decrease of the rolling resistance of a tyre made thereof.

The addition of silane 7 and 9 lead to increase of the M300 and the reinforcing index (M300/M100) compared to comparative example C2b showing a better reinforcing capacity of the filler/silane association and possible better wear performances.

### Example 10

Following the procedure of Example 1, modified rubber compositions were prepared from the formulations shown in Table 13 below, in which the ingredients are as stated in Example 1 and:
- Silane 7 - acryloxypropyltriethoxysilane
- Rhenacit^{®} 11 WG is known as a peptiser for natural rubber - diphenyldisulfide on inert carrier from Lanxess

Comparative example C2c is similar to C2. Example 7a is similar to example 7.

The modified rubber compositions of Examples 10 and comparative examples C2c were tested similarly to Examples 1 and 2. The results are shown in Table 14

**Table 13**

| Example | C2c | 7a | 11 |
|---|---|---|---|
| Ingredients | parts | parts | Parts |
| NR SVR 10 - CV60 | 100.0 | 100.0 | 100.0 |
| Silica - Z1165MP | 0.0 | 50.0 | 50.0 |
| Carbon black N234 | 45.0 | 0.0 | 0.0 |
| Silane 7 | 0.0 | 4.1 | 4.1 |
| Rhenacit 11 WG | 0.0 | 0.0 | 0.1 |
| ACST | 2.5 | 2.5 | 2.5 |
| ZnO | 3.0 | 3.0 | 3.0 |
| 6PPD | 2.0 | 2.0 | 2.0 |
| Carbon black N330 | 0.0 | 3.0 | 3.0 |
| S | 1.5 | 1.5 | 1.5 |
| CBS | 1.0 | 1.75 | 1.8 |
| DPG | 0.0 | 1.0 | 0.0 |

**Table 14**

| Example | C2c | 7a | 10 |
|---|---|---|---|
| Mooney Viscosity @100 °C | | | |
| Mmax (m.u.) | 74 | 78 | 78 |
| ML1+4 (m.u.) | 57 | 54 | 52 |
| Rheometer @160 °C | | | |
| ML (dNm) | 2,0 | 1,8 | 1,6 |
| MH (dNm) | 15,1 | 15,2 | 15,0 |
| Time@5% cure S' (min) | 2,6 | 3,1 | 3,3 |
| Time@95% cure S' (min) | 7,4 | 6,9 | 6,9 |
| Time@2 dNm scorch S' (min) | 3,7 | 4,1 | 4,0 |
| MH-ML (dNm) | 13,1 | 13,5 | 13,4 |

| Dynamic properties, strain sweep @55 °C, simple shear | | | |
|---|---|---|---|
| G'₀(Pa) | 6,19 | 3,42 | 2,77 |
| G'_{0 return} (Pa) | 4,52 | 2,71 | 2,31 |
| ΔG'₀ (Pa) | 1,676 | 0,711 | 0,459 |
| G'ₘₐₓ (Pa) | 0,896 | 1,179 | 1,148 |
| ΔG' (Pa) | 5,297 | 2,243 | 1,624 |
| Tan δ 6%□ | 0,201 | 0,122 | 0,112 |
| Tan δ 6%, second strain sweep | 0,212 | 0,116 | 0,104 |

| Dynamic properties, T °C sweep | | | |
|---|---|---|---|
| Tan δ _{0 °C} | 0,121 | 0,142 | 0,141 |
| Tan δ _{30 °C} | 0,090 | 0,073 | 0,073 |
| Tan δ _{55 °C} | 0,088 | 0,064 | 0,061 |
| Tan δ _{70 °C} | 0,089 | 0,062 | 0,058 |
| Tan δ ₘₐₓ | 0,863 | 1,093 | 1,125 |

| Physical properties | | | |
|---|---|---|---|
| M10 (MPa) | 0,7 | 0,6 | 0,6 |
| M100 (MPa) | 3,3 | 3,1 | 3,4 |
| M250 (Mpa) | 12,5 | 13,3 | 14,7 |
| M300 (MPa) | 16,3 | 17,7 | 19,2 |
| M250/M 100 | 3,8 | 4,3 | 4,3 |
| M300/M100 | 5,0 | 5,7 | 5,6 |
| Tensile break (MPa) | 30,2 | 31,0 | 30,0 |
| Elong max (%) | 501 | 472 | 436 |

| Compound weight | | | |
|---|---|---|---|
| Specific gravity | 1,088 | 1,133 | 1,132 |

As required by the application the Mooney viscosity (ML1+4) is the required range for examples 7a and 10.

The addition of silane 7 with Rhenacit^{®} 11 WG lead to further decrease the value of tanδ 6%, second strain compared to comparative example C2b. This is associated with a decrease of the rolling resistance of a tyre made thereof.

The addition of silane 7 with peptiser lead to increase of the reinforcing index (M300/M100) and a further increase of the M300 compared to comparative example C2b showing a better reinforcing capacity of the filler/silane association and possible better wear performances.

### Example 11 to 18

Following the procedure of Example 1, modified rubber compositions were prepared from the formulations shown in Table 15 below, in which the ingredients are as stated in Example 1 and:
- Silane 7 - acryloxypropyltriethoxysilane
- Silane 10 - phenyltrimethoxysilane (Comparative)
- Silane 11 - bis(triethoxysilylpropyl)-disulfane
- Silane 12 - bis(triethoxysilyl)-octane
- Silane 13 - propyltriethoxysilane
- Silane 14 - octyltriethoxysilane
- Silane 5 - bis(triethoxysilylpropyl)-tetrasulfane
- Resin 1 - a silicone T-resin containing phenyl groups and propyl groups in a ratio of about 7:3 with a hydroxyl content of 6.5% by weight, prepared as described in Example 1 of US-A-5173290.
- Resin 2 - a silicone T-resin containing phenyl groups, with a hydroxyl content of 8% by weight and weight average molecular weight Mw 1900.

Comparative example C2d is similar to C2.

The modified rubber compositions of Examples 11 to 18 and comparative examples C2d were tested similarly to Examples 1 and 2. The results are shown in Table 16

**Table 15**

| Example | C2d | 11 | 12 | 13 | 14 | 15 | 16 | 17 | 18 |
|---|---|---|---|---|---|---|---|---|---|
| Ingredients | parts | parts | parts | parts | parts | parts | parts | parts | parts |
| NR SVR 10 - CV60 | 100 | 100 | 100 | 100 | 100 | 100 | 100 | 100 | 100 |
| Silica - Z1165MP | 0.0 | 50.0 | 50.0 | 50.0 | 50.0 | 50.0 | 50.0 | 50.0 | 50.0 |
| Carbon black N234 | 45.0 | 0.0 | 0.0 | 0.0 | 0.0 | 0.0 | 0.0 | 0.0 | 0.0 |
| Silane 7 | 0.0 | 2.9 | 2.9 | 2.9 | 2.9 | 2.9 | 5.7 | 5.7 | 2.9 |
| Silane 10 | 0.0 | 2.1 | 0.0 | 0.0 | 0.0 | 0.0 | 0.0 | 0.0 | 0.0 |
| Silane 11 | 0.0 | 0.0 | 2.6 | 0.0 | 0.0 | 0.0 | 0.0 | 0.0 | 0.0 |
| Silane 12 | 0.0 | 0.0 | 0.0 | 2.3 | 0.0 | 0.0 | 0.0 | 0.0 | 0.0 |
| Silane 13 | 0.0 | 0.0 | 0.0 | 0.0 | 2.2 | 0.0 | 0.0 | 0.0 | 0.0 |
| Silane 14 | 0.0 | 0.0 | 0.0 | 0.0 | 0.0 | 2.9 | 0.0 | 0.0 | 0.0 |
| Resin 1 | 0.0 | 0.0 | 0.0 | 0.0 | 0.0 | 0.0 | 1.0 | 0.0 | 0.0 |
| Resin 2 | 0.0 | 0.0 | 0.0 | 0.0 | 0.0 | 0.0 | 0.0 | 1.0 | 0.0 |
| Silane 5 | 0.0 | 0.0 | 0.0 | 0.0 | 0.0 | 0.0 | 0.0 | 0.0 | 2.7 |
| ACST | 2.5 | 2.5 | 2.5 | 2.5 | 2.5 | 2.5 | 2.5 | 2.5 | 2.5 |
| ZnO | 3.0 | 3.0 | 3.0 | 3.0 | 3.0 | 3.0 | 3.0 | 3.0 | 3.0 |
| 6PPD | 2.0 | 2.0 | 2.0 | 2.0 | 2.0 | 2.0 | 2.0 | 2.0 | 2.0 |
| Carbon black N330 | 0.0 | 3.0 | 3.0 | 3.0 | 3.0 | 3.0 | 3.0 | 3.0 | 3.0 |
| S | 1.5 | 2.4 | 1.73 | 2.4 | 2.4 | 2.4 | 2.4 | 2.4 | 1.5 |
| CBS | 1.0 | 1.0 | 1.0 | 1.0 | 1.0 | 1.0 | 1.0 | 1.0 | 1.8 |
| DPG | 0.0 | 0.8 | 0.8 | 0.8 | 0.8 | 0.8 | 0.8 | 0.8 | 0.0 |

**Table 16**

| Example | C2d | 11 | 12 | 13 | 14 | 15 | 16 | 17 | 18 |
|---|---|---|---|---|---|---|---|---|---|
| Mooney Viscosity @100 °C | | | | | | | | | |
| Mmax (m.u.) | 78 | 80 | 114 | 101 | 103 | 91 | 133 | 146 | 92 |
| ML1+4 (m.u.) | 61 | 56 | 63 | 56 | 61 | 52 | 69 | 70 | 58 |

| Rheometer @160 °C | | | | | | | | | |
|---|---|---|---|---|---|---|---|---|---|
| ML (dNm) | 2,1 | 1,7 | 1,8 | 1,6 | 1,8 | 1,7 | 1,7 | 1,7 | 2.0 |
| MH (dNm) | 16,2 | 16,7 | 17,1 | 17,1 | 16,6 | 14,0 | 14,1 | 14,3 | 17,1 |
| Time@5% cure S' (min) | 2,8 | 3,2 | 3,0 | 3,1 | 3,0 | 3,2 | 3,2 | 3,4 | 15,2 |
| Time@95% cure S' (min) | 7,0 | 9,6 | 6,9 | 7,4 | 7,6 | 10,4 | 10,3 | 10,3 | 3,5 |
| Time@2 dNm scorch S' (min) | 3,5 | 5,3 | 3,5 | 3,5 | 3,6 | 6,1 | 6,1 | 6,1 | 8,9 |
| MH-ML (dNm) | 14,1 | 15,0 | 15,3 | 15,5 | 14,8 | 12,4 | 12,4 | 12,6 | 4,8 |

| Dynamic properties, strain sweep @55 °C, simple shear | | | | | | | | | |
|---|---|---|---|---|---|---|---|---|---|
| G'₀ (Pa) | 6,37 | 3,20 | 4,14 | 3,34 | 3,61 | 2,72 | 2,38 | 2,28 | 3,45 |
| G'_{0 return} (Pa) | 5,45 | 2,77 | 3,48 | 2,85 | 3,01 | 2,32 | 2,02 | 1,97 | 2,89 |
| AG'₀ (Pa) | 0,919 | 0,429 | 0,661 | 0,488 | 0,591 | 0,406 | 0,365 | 0,309 | 0,553 |
| G'ₘₐₓ (Pa) | 1,206 | 1,245 | 1,271 | 1,261 | 1,192 | 1,119 | 1,049 | 1,094 | 1,200 |
| ΔG' (Pa) | 5,167 | 1,954 | 2,867 | 2,077 | 2,413 | 1,605 | 1,336 | 1,181 | 2,248 |
| Tan δ 6%□ | 0,193 | 0,097 | 0,128 | 0,106 | 0,127 | 0,109 | 0,098 | 0,089 | 0,120 |
| Tan δ 6%, second strain sweep | 0,200 | 0,098 | 0,135 | 0,105 | 0,126 | 0,104 | 0,099 | 0,089 | 0,123 |

| Dynamic properties, T °C sweep | | | | | | | | | |
|---|---|---|---|---|---|---|---|---|---|
| Tan δ _{0 °C} | 0,123 | 0,159 | 0,135 | 0,145 | 0,144 | 0,160 | 0,156 | 0,154 | 0,143 |
| Tan δ _{30 °C} | 0,088 | 0,072 | 0,077 | 0,072 | 0,077 | 0,082 | 0,080 | 0,077 | 0,086 |
| Tan δ _{55 °C} | 0,082 | 0,054 | 0,067 | 0,060 | 0,072 | 0,067 | 0,062 | 0,059 | 0,070 |
| Tan δ _{70 °C} | 0,082 | 0,051 | 0,067 | 0,057 | 0,066 | 0,065 | 0,060 | 0,056 | 0,065 |
| Tan δ ₘₐₓ | 0,857 | 1,016 | 0,964 | 1,019 | 0,995 | 1,122 | 1,141 | 1,150 | 0,995 |

| Physical properties | | | | | | | | | |
|---|---|---|---|---|---|---|---|---|---|
| M10 (MPa) | 0,7 | 0,6 | 0,7 | 0,7 | 0,6 | 0,5 | 0,5 | 0,5 | 0,6 |
| M100 (MPa) | 3,4 | 3,5 | 3,7 | 3,6 | 3,4 | 3,0 | 3,0 | 3,1 | 3,6 |
| M250 (Mpa) | 13,1 | 14,2 | 13,9 | 14,3 | 13,1 | 12,2 | 13,5 | 14,4 | 13,7 |
| M300 (MPa) | 17,1 | 18,4 | 17,8 | 18,5 | 17,1 | 16,0 | 17,9 | 19,1 | 17,6 |
| M250/M100 | 3,8 | 4,0 | 3,8 | 3,9 | 3,9 | 4,0 | 4,5 | 4,6 | 3,8 |
| M300/M100 | 5,0 | 5,2 | 4,9 | 5,1 | 5,0 | 5,3 | 6,0 | 6,1 | 4,9 |
| Tensile break (MPa) | 29,4 | 30,2 | 30,6 | 31,0 | 30,6 | 29,4 | 30,8 | 30,7 | 28,4 |
| Elong max (%) | 483 | 457 | 476 | 468 | 490 | 492 | 465 | 439 | 448,8 |
| Shore A | 63 | 62 | 63 | 62 | 62 | 59 | 60 | 59 | 63 |

As required by the application the shore A hardness and the Mooney viscosity (ML1+4) are the required range for examples 11 to 18.

The combination of silane 7 with other coupling agents (silane 5 and 11), hydrophobing agents (silane 10, 12, 13 and 14) or silicone resin (resin 1 and 2) lead to decrease the value of tan δ 6%, second strain compared to comparative example C2d. This is associated with a decrease of the rolling resistance of a tyre made thereof.

The combination of silane 7 with other coupling agent (silane 5 and 11), hydrophobing agent (silane 10, 12, 13 and 14) or silicone resin (resin 1 and 2) lead to increase the tan δ max value compared to comparative example C2d. This is associated with improved wet traction property of a tyre made thereof.

### Example 19 and 20

Following the procedure of Example 1, modified rubber compositions were prepared from the formulations shown in Table 17 below, in which the ingredients are as stated in Example 1 and:
- Silane/CB: Silane 7 supported on carbon black by a physical deposition of silane 7 on the surface of carbon black. The ratio between carbon Black (N330) and silane 7 is a 1 to 1 ratio in weight

Comparative example C2e is similar to C2

The modified rubber compositions of Examples 19 and 20 and comparative examples C2e were tested similarly to Examples 1 and 2. The results are shown in Table 18

**Table 17**

| Example | C2e | 19 | 20 |
|---|---|---|---|
| Ingredients | parts | parts | parts |
| NR SVR 10 - CV60 | 100 | 100 | 100 |
| Silica - Z1165MP | 0.0 | 50 | 50 |
| Carbon black N234 | 45.0 | 0 | 0 |
| Silane 7 | 0.0 | 4.1 | 1.1 |
| Silane/CB | 0.0 | 0 | 6.0 |
| ACST | 2.5 | 2.5 | 2.5 |
| ZnO | 3.0 | 3.0 | 3.0 |
| 6PPD | 2.0 | 2.0 | 2.0 |
| Carbon black N330 | 0.0 | 3.0 | 0.0 |
| S | 1.5 | 1.5 | 1.5 |
| CBS | 1.0 | 1.75 | 1.75 |
| DPG | 0.0 | 1.0 | 1.0 |

**Table 18**

| Example | C2e | 19 | 20 |
|---|---|---|---|
| Mooney Viscosity @100 °C | | | |
| Mmax (m.u.) | 69 | 79 | 79 |
| ML1+4 (m.u.) | 53 | 60 | 57 |

| Rheometer @160 °C | | | |
|---|---|---|---|
| ML (dNm) | 1,6 | 2,0 | 2,0 |
| MH (dNm) | 14,9 | 15,9 | 15,9 |
| Time@5% cure S' (min) | 2,5 | 3,0 | 3,2 |
| Time@95% cure S' (min) | 7,0 | 6,5 | 7,2 |
| Time@2 dNm scorch S' (min) | 3,5 | 3,8 | 4,3 |
| MH-ML (dNm) | 13,3 | 13,8 | 14,0 |

| Dynamic properties, strain sweep @55 °C, simple shear | | | |
|---|---|---|---|
| G'₀ (Pa) | 6,7 | 3,8 | 3,6 |
| G'_{0 return} (Pa) | 5,3 | 3,1 | 2,9 |
| ΔG'₀ (Pa) | 1,39 | 0,73 | 0,69 |
| G'ₘₐₓ (Pa) | 1,32 | 1,21 | 1,18 |
| ΔG' (Pa) | 5,41 | 2,62 | 2,37 |
| Tan δ □6% | 0,18 | 0,13 | 0,13 |
| Tan δ 6%, second strain sweep | 0,19 | 0,13 | 0,12 |

| Physical properties | | | |
|---|---|---|---|
| M10 (MPa) | 0,6 | 0,6 | 0,6 |
| M100 (MPa) | 3,1 | 3,2 | 3,1 |
| M250 (Mpa) | 12,1 | 13,6 | 13,4 |
| M300 (MPa) | 15,8 | 17,8 | 17,8 |
| M250/M100 | 3,9 | 4,3 | 4,3 |
| M300/M100 | 5,1 | 5,6 | 5,8 |
| Tensile break (MPa) | 28,3 | 30,1 | 30,4 |
| Elong max (%) | 495 | 469 | 463 |

As required by the application the Mooney viscosity (ML1+4) are the required range for examples 19 and 20.

Compared to comparative example C2e example 19 and 20 lead to decrease the value of tan δ 6%, second strain. This is associated with a decrease of the rolling resistance of a tyre made thereof.

Compared to comparative example C2e examples 19 and 20 lead to increase the value of M300/M100 in the physical properties. This is associated with a increase of the wear performance of the tyre made thereof.

Comparing example 19 and 20 obtained performances are identical, thus having silane 7 supported onto carbon black did not impact the rubber performance of a tyre made thereof. Having silane 7 already on a solid carrier improves handling of the material.

### Example 21 and 22

Following the procedure of Example 1, modified rubber compositions were prepared from the formulations shown in Table 19 below, in which the ingredients are as stated in Example 1

Comparative example C2f is similar to C2

The modified rubber compositions of Examples 21 and comparative examples C2f were tested similarly to Examples 1 and 2. The results are shown in Table 20

**Table 19**

| Example | C2f | 21 | 22 |
|---|---|---|---|
| Ingredients | parts | parts | parts |
| NR SVR 10 - CV60 | 100 | 100 | 100 |
| Silica - Z1165MP | 0.0 | 50 | 50 |
| Carbon black N234 | 45.0 | 0 | 0 |
| Silane 7 | 0.0 | 2.3 | 2.8 |
| ACST | 2.5 | 2.5 | 2.5 |
| ZnO | 3.0 | 3.0 | 3.0 |
| 6PPD | 2.0 | 2.0 | 2.0 |
| Carbon black N330 | 0.0 | 3.0 | 0.0 |
| S | 1.5 | 2.4 | 2.1 |
| CBS | 1.0 | 1.8 | 1.8 |
| DPG | 0.0 | 1.0 | 1.0 |

**Table 20**

| Example | C2f | 21 | 22 |
|---|---|---|---|
| Mooney Viscosity @100 °C | | | |
| Mmax (m.u.) | 66 | 66 | 69 |
| ML1+4 (m.u.) | 50 | 45 | 43 |

| Rheometer @160 °C | | | |
|---|---|---|---|
| ML (dNm) | 1,6 | 1,3 | 1,2 |
| MH (dNm) | 16,2 | 17,2 | 16,8 |
| Time@5% cure S' (min) | 2,9 | 3,2 | 3,3 |
| Time@95% cure S' (min) | 7,1 | 6,5 | 6,9 |
| Time@2 dNm scorch S' (min) | 3,5 | 3,8 | 3,9 |
| MH-ML (dNm) | 14,6 | 15,9 | 15,6 |

| Dynamic properties, strain sweep @55 °C, simple shear | | | |
|---|---|---|---|
| G'₀ (Pa) | 5,89 | 3,49 | 3,2 |
| G'_{0 return} (Pa) | 4,96 | 2,86 | 2,6 |
| ΔG'₀ (Pa) | 0,93 | 0,64 | 0,60 |
| G'ₘₐₓ (Pa) | 1,27 | 1,32 | 1,38 |
| ΔG' (Pa) | 4,62 | 2,17 | 1,77 |
| Tan δ□6% | 0,18 | 0,09 | 0,08 |
| Tan δ 6%, second strain sweep | 0,18 | 0,09 | 0,07 |

| Dynamic properties, T °C sweep | | | |
|---|---|---|---|
| Tan δ _{0 °C} | 0,121 | 0,143 | 0,140 |
| Tan δ _{30 °C} | 0,083 | 0,060 | 0,055 |
| Tan δ _{55 °C} | 0,078 | 0,048 | 0,041 |
| Tan δ _{70 °C} | 0,076 | 0,048 | 0,040 |
| Tan δ ₘₐₓ | 0,869 | 1,101 | 1,159 |

| Physical properties | | | |
|---|---|---|---|
| M10 (MPa) | 0,7 | 0,6 | 0,6 |
| M100 (MPa) | 3,7 | 3,7 | 3,9 |
| M250 (Mpa) | 14,1 | 14,5 | 15,7 |
| M300 (MPa) | 18,2 | 18,7 | 20,3 |
| M250/M100 | 3,8 | 3,9 | 4,1 |
| M300/M100 | 4,9 | 5,0 | 5,3 |
| Tensile break (MPa) | 29,0 | 31,0 | 30,2 |
| Elong max (%) | 446 | 465 | 423 |
| Shore A | 63 | 63 | 62 |

As required by the application the Mooney viscosity (ML1+4) are the required range for examples 21 and 22.

Compared to comparative example C2f example 21 and 22 lead to decrease the value of tan δ 6%, second strain even with low silane 7 content. This is associated with a decrease of the rolling resistance of a tyre made thereof.

The low level of silane permits to reduce odours emitted during the process while keeping good properties.

### Example 23

Following the procedure of Example 1, modified rubber compositions were prepared from the formulations shown in Table 21 below, in which the ingredients are as stated in Example 1 and:
- Natsyn 2200 is a synthetic isoprene rubber produced by the Goodyear tyre company

The modified rubber compositions of Examples 23 and comparative examples C3 were tested similarly to Examples 1 and 2. The results are shown in Table 22

**Table 21**

| Example | C3 | 23 |
|---|---|---|
| Ingredients | parts | parts |
| Natsyn 2200 | 100 | 100 |
| Silica - Z1165MP | 50 | 50 |
| Silane 7 | 0.0 | 5.7 |
| Silane 5 | 5.5 | 0.0 |
| ACST | 2.5 | 2.5 |
| ZnO | 3.0 | 3.0 |
| 6PPD | 2.0 | 2.0 |
| Carbon black N330 | 0.0 | 3.0 |
| S | 1.5 | 2.4 |
| CBS | 1.0 | 1.8 |

**Table 22**

| Example | C3 | 23 |
|---|---|---|
| Mooney Viscosity @100 °C | | |
| Mmax (m.u.) | 74 | 67 |
| ML1+4 (m.u.) | 57 | 53 |

| Rheometer @160 °C | | |
|---|---|---|
| ML (dNm) | 2,17 | 1,72 |
| MH (dNm) | 16,27 | 13,29 |
| Time@5% cure S' (min) | 2,74 | 4,65 |
| Time@95% cure S' (min) | 9,08 | 13,58 |
| Time@2 dNm scorch S' (min) | 4,43 | 8,51 |
| MH-ML (dNm) | 14,1 | 11,57 |

| Dynamic properties, strain sweep @55 °C, simple shear | | |
|---|---|---|
| G'₀ (Pa) | 3,5 | 2,4 |
| G'_{0 return} (Pa) | 2,9 | 2.0 |
| ΔG'₀ (Pa) | 0,60 | 0,43 |
| G'ₘₐₓ (Pa) | 1,16 | 1,04 |
| ΔG' (Pa) | 2,39 | 1,35 |
| Tan δ □6□ | 0,14 | 0,12 |
| Tan δ 6%, second strain sweep | 0,14 | 0,11 |

| Dynamic properties, T °C sweep | | |
|---|---|---|
| Tan δ _{0 °C} | 0,16 | 0,18 |
| Tan δ _{30 °C} | 0,09 | 0,10 |
| Tan δ _{55 °C} | 0,08 | 0,08 |
| Tan δ _{70 °C} | 0,07 | 0,07 |
| Tan δ ₘₐₓ | 0,98 | 1,12 |

| Physical properties | | |
|---|---|---|
| M10 (MPa) | 0,5 | 0,5 |
| M100 (MPa) | 3,0 | 2,6 |
| M250 (Mpa) | 10,2 | 11,0 |
| M300 (MPa) | 13,1 | 14,9 |
| M250/M100 | 3,4 | 4,3 |
| M300/M100 | 4,4 | 5,9 |
| Tensile break (MPa) | 27,4 | 25,7 |
| Elong max (%) | 544 | 441 |
| Shore A | 61 | 57 |

Compared to comparative example C3 example 23 lead to decrease the value of tan δ 6%, second strain even with low silane 7 content. This is associated with a decrease of the rolling resistance of a tyre made thereof.

Compared to comparative example C3 example 23 lead to increase the value of M300/M100 in the physical properties. This is associated with a increase of the wear performance of the tyre made thereof.

Compared to comparative example C3 example 23 lead to increase the value of tan(δ) max. This is associated with a increase of the wet traction of the tyre made thereof.

Results showed in table 22 lead to improved overall rubber compound properties using a synthetic isoprene compared to conventional silane 5 used in passenger car tyre.

### Example 24 to 27

Modified rubber compositions were prepared from the formulations shown in Table 23 below, in which the ingredients are as stated in Example 1 and:
- Silane 15 is prepared via Michael addition route as described earlier as the mixture of pentaerythritoltetraacrylate and drop wise addition of methylaminopropyl-trimethoxysilane in a ratio of 1:2 in moles (comparative)
- Silane 16 is prepared via Michael addition route as described earlier as the mixture of pentaerythritoltetraacrylate and drop wise addition of methylaminopropyl-trimethoxysilane in a ratio of 1:2.5 in moles (comparative)
- Silane 17 is prepared via Michael addition route as described earlier as the mixture of pentaerythritoltetraacrylate and drop wise addition of methylaminopropyl-trimethoxysilane in a ratio of 1:3 in moles (comparative)
- Silane 18 is acryloxypropylmethyldiethoxysilane

Comparative example C2g is similar to C2.

The modified rubber compositions of Examples 24 to 26 and comparative examples C2g were tested similarly to Examples 1 and 2. The results are shown in Table 26

**Table 23**

| Example | C2d | 24 | 25 | 26 | 27 |
|---|---|---|---|---|---|
| Ingredients | parts | parts | parts | parts | parts |
| NR SVR 10 - CV60 | 100 | 100 | 100 | 100 | 100 |
| Silica - Z1165MP | 0.0 | 50.0 | 50.0 | 50.0 | 50.0 |
| Carbon black N234 | 45.0 | 0.0 | 0.0 | 0.0 | 0.0 |
| Silane 15 | 0.0 | 7.68 | 0.0 | 0.0 | 2.9 |
| Silane 16 | 0.0 | 0.0 | 6.95 | 0.0 | 0.0 |
| Silane 17 | 0.0 | 0.0 | 0.0 | 6.46 | 0.0 |
| Silane 18 | 0.0 | 0.0 | 0.0 | 0.0 | 5.87 |
| ACST | 2.5 | 2.5 | 2.5 | 2.5 | 2.5 |
| ZnO | 3.0 | 3.0 | 3.0 | 3.0 | 3.0 |
| 6PPD | 2.0 | 2.0 | 2.0 | 2.0 | 2.0 |
| Carbon black N330 | 0.0 | 3.0 | 3.0 | 3.0 | 3.0 |
| S | 1.5 | 1.5 | 1.5 | 1.5 | 1.5 |
| CBS | 1.0 | 1.8 | 1.8 | 1.8 | 1.8 |

The compounding of the natural rubber, filler and silane (non-productive phase) was carried out using thermomechanical kneading in a Banbury mixer. The procedure was as shown in Table 24 for the first non productive stage, which indicates the time of addition of various ingredients and the estimated temperature of the mixture at that time measured with the internal thermocouple from the mixer. The temperature at the end of mixing was measured inside the rubber after dumping it from the mixer. A second non-productive stage was added to optimise silica dispersion; the procedure was as shown in table 25 for the second non productive phase.

**Table 24**

| Time in seconds | 0 | 30 | 60 | 240 | 360 |
|---|---|---|---|---|---|
| Ingredients | Natural rubber | 2/3 Filler (+ silane) | 1/3 filler | Ram opening | End mixing |
| Mixer internal probe indicative temperature ( °C) | 80 | 90 | 100 | 120 | 150-160 |

**Table 25**

| Time in seconds | 0 | 60 | 120 | 300 |
|---|---|---|---|---|
| Ingredients | 2/3 Masterbatch from previous phase | 1/3 Masterbatch from previous phase | Stearic acid ZnO 6PPD | End mixing |
| Mixer internal probe indicative temperature ( °C) | 80 | 90 | 120 | 140-150 |

The modified natural rubber composition thus produced was milled on a two-roll mill at a temperature of about 70 °C during which milling the curing agents were added (productive phase). The mixing procedure for the productive phase is shown in Table 3.

**Table 26**

| Example | C2g | 24 | 25 | 26 | 27 |
|---|---|---|---|---|---|
| Mooney Viscosity @100 °C | | | | | |
| Mmax (m.u.) | 47,7 | 61,1 | 51,0 | 55,7 | 59,8 |
| ML1+4 (m.u.) | 33,7 | 36,5 | 36,8 | 38,6 | 38,8 |
| Rheometer @160 °C | | | | | |
| ML (dNm) | 0,8 | 1,0 | 1,0 | 1,0 | 0,9 |
| MH (dNm) | 14,7 | 14,7 | 14,7 | 13,9 | 15,6 |
| Time@5% cure S' (min) | 3,4 | 3,3 | 3,2 | 3,1 | 4,9 |
| Time@95% cure S' (min) | 7,6 | 6,2 | 6,2 | 5,6 | 10,7 |
| Time@2 dNm scorch S' (min) | 4,1 | 3,8 | 3,7 | 3,7 | 6,2 |
| MH-ML (dNm) | 14,0 | 13,7 | 13,8 | 13,0 | 14,8 |

| Dynamic properties, strain sweep @55 °C, simple shear | | | | | |
|---|---|---|---|---|---|
| G'₀ (Pa) | 5,15 | 2,49 | 2,53 | 2,92 | 3,60 |
| G'_{0 return} (Pa) | 4,45 | 2,12 | 2,17 | 2,40 | 2,99 |
| ΔG'₀ (Pa) | 0,69 | 0,36 | 0,36 | 0,52 | 0,61 |
| G'ₘₐₓ (Pa) | 1,21 | 1,33 | 1,26 | 1,26 | 1,21 |
| ΔG' (Pa) | 3,93 | 1,16 | 1,27 | 1,66 | 2,39 |
| Tan δ□6% | 0,17 | 0,08 | 0,09 | 0,10 | 0,12 |
| Tan δ 6%, second strain sweep | 0,18 | 0,08 | 0,08 | 0,09 | 0,12 |

| Dynamic properties, T °C sweep | | | | | |
|---|---|---|---|---|---|
| Tan δ _{0 °C} | 0,13 | 0,14 | 0,13 | 0,13 | 0,14 |
| Tan δ _{30 °C} | 0,09 | 0,07 | 0,07 | 0,07 | 0,07 |
| Tan δ _{55 °C} | 0,08 | 0,05 | 0,05 | 0,06 | 0,06 |
| Tan δ _{70 °C} | 0,08 | 0,05 | 0,05 | 0,06 | 0,06 |
| Tan δ ₘₐₓ | 0,92 | 1,31 | 1,16 | 1,10 | 1,03 |

| Physical properties | | | | | |
|---|---|---|---|---|---|
| M10 (MPa) | 0,7 | 0,6 | 0,6 | 0,6 | 0,6 |
| M100 (MPa) | 3,9 | 4,3 | 4,1 | 3,8 | 3,4 |
| M250 (Mpa) | 15,2 | 17,3 | 15,5 | 14,2 | 13,9 |
| M300 (MPa) | 19,5 | 21,7 | 19,6 | 18,1 | 18,1 |
| M250/M100 | 3,9 | 4,0 | 3,8 | 3,8 | 4,1 |
| M300/M100 | 5,0 | 5,1 | 4,8 | 4,8 | 5,4 |
| Tensile break (MPa) | 30,4 | 23,0 | 26,4 | 24,6 | 30,4 |
| Elong max (%) | 448,5 | 315,0 | 392,1 | 393,2 | 458,7 |
| Shore A | 62 | 62 | 64 | 62 | 62 |

As required by the application the Mooney viscosity (ML1+4) are in the required range for example 24 to 27.

Compared to comparative example C2g examples 24 to 27 lead to decrease the value of tan δ 6%, second strain. This is associated with a decrease of the rolling resistance of a tyre made thereof.

Compared to comparative example C2g examples 24 to 27 lead to same value of M300/M100 in the physical properties. This is associated with the wear performance of the tyre made thereof.

Compared to comparative example C2g example 24 to 27 lead to increase the value of tan(δ) max. This is associated with a increase of the wet traction of the tyre made thereof.

## Claims

1. A process for modifying a diene elastomer by reaction with an olefinically unsaturated silane having at least one hydrolysable group bonded to silicon, **characterized in that** the silane has the formula:
• R"-CH=CH-C(O)X-Y-SiRₐR'₍₃₋ₐ₎ (I) or
• R"-C≡C(O)X-Y-SiRₐR'₍₃₋ₐ₎ (II)
in which R represents a hydrolysable group; R' represents a hydrocarbyl group having 1 to 6 carbon atoms; a has a value in the range 1 to 3 inclusive; Y represents a divalent organic spacer linkage comprising at least one carbon atom separating the linkage -C(O)X- from the Si atom, and R" represents hydrogen or a group having an electron withdrawing effect with respect to the -CH=CH- or -C≡C- bond; X is selected from S and O; and the silane is reacted with the diene elastomer in the absence of any free radical initiator and where R is acyloxy, ketoxime, amido, amino, aminoxy, alkenyloxy or alkoxy group containing ethylene glycol polymer chain or ethoxy.

2. A process according to Claim 1 **characterised in that** each group R in the unsaturated silane (I) or (II) is an alkoxy group.

3. A process according to Claim 1 or Claim 2 **characterised in that** the unsaturated silane (I) or (II) is partially hydrolyzed and condensed into oligomers.

4. A process according to any of Claims 1 to 3 **characterised in that** the unsaturated silane (I) comprises -acryloxypropyltriethoxysilane, acryloxymethyltriethoxysilaneand/or bis-(triethoxysilylpropyl)-fumarate.

5. A process according to any of Claims 1 to 4 **characterised in that** the formulation contains isoprenic rubber, preferably natural rubber or a synthetic polymer which is a homopolymer or copolymer of a diene monomer.

6. A process according to any of Claims 1 to 5 **characterized in that** the unsaturated silane (I) or (II) is present at 0.5 to 15.0% by weight based on the diene elastomer during the reaction.

7. A process according to any of Claims 1 to 6 **characterized in that** the diene elastomer and the unsaturated silane (I) or (II) are reacted at a temperature in the range 90 °C to 200 °C, preferably 120 °C to 180 °C.

8. A process according to any of Claims 1 to 7 **characterised in that** a filler which is preferably silica, is present during the reaction of the diene elastomer with the unsaturated silane (I) or (II).

9. A process for the production of a rubber article **characterized in that** a filled elastomer composition prepared by the process of Claim 8 is shaped and cured by sulfur, a sulfur compound, peroxide or by exposure to moisture in the presence or not of a silanol condensation catalyst.

10. A process according to any preceding claim wherein X is O.

11. A grafted diene elastomer having the formula:
• R"-CH(P)-CH2-C(O)X-Y-SiRₐR'₍₃₋ₐ₎ and/or the formula
• R"-CH₂-CH(P)-C(O)X-Y-SiRₐR'₍₃₋ₐ₎ and/or the formula
• R"-C(P)=CH-C(O)X-Y-SiRₐR'₍₃₋ₐ₎ and/or the formula
• R"-CH=C(P)-C(O)X-Y-SiRₐR'₍₃₋ₐ₎,
wherein R represents a hydrolysable group; where R is acyloxy, ketoxime, amido, amino, aminoxy, alkenyloxy or alkoxy group containing ethylene glycol polymer chain or ethoxy, R' represents a hydrocarbyl group having 1 to 6 carbon atoms; a has a value in the range 1 to 3 inclusive; Y represents a divalent organic spacer linkage comprising at least one carbon atom separating the linkage -C(O)X- from the Si atom; X can be S or O; P represents a diene elastomer polymer residue; and R" represents hydrogen or a group of the formula -C(O)X-Y-SiRₐR'₍₃₋ₐ₎ where Y, R and R' are defined as above.

12. A grafted diene elastomer according to claim 11 wherein Y contains one or more heteroatoms and/or X is O.

13. Use of a silane having the formula:
• R"-CH=CH-C(O)X-Y-SiRaR'₍₃₋ₐ₎ (I) or
• R"-C≡C-C(O)X-Y-SiRaR'₍₃₋ₐ₎ (II)
wherein R represents a hydrolysable group where R is acyloxy, ketoxime, amido, amino, aminoxy, alkenyloxy or alkoxy group containing ethylene glycol polymer chain or ethoxy; R' represents a hydrocarbyl group having 1 to 6 carbon atoms; a has a value in the range 1 to 3 inclusive; Y represents a divalent organic spacer linkage comprising at least one carbon atom separating the linkage -C(O)X- from the Si atom; X can be S or O; and R" represents hydrogen or a group having an electron withdrawing effect with respect to the -CH=CH- or -C≡C- bond, as a coupling agent for a diene elastomer composition containing a reinforcing filler.

14. Use of a silane according to claim 13 wherein X is O.

15. Use of the curable rubber composition produced by the process of any of Claims 1 to 10 in the production of tyres or any parts thereof or engineered rubber goods, belts, or hoses.

## Patentansprüche

1. Verfahren zum Modifizieren eines Dienelastomers durch Umsetzen mit einem olefinisch ungesättigten Silan, bei dem mindestens eine hydrolysierbare Gruppe an Silicium gebunden ist, **dadurch gekennzeichnet, dass** das Silan die folgende Formel aufweist:
• R"-CH=CH-C(O)X-Y-SiRₐR' ₍₃₋ₐ₎ (I) oder
• R"-C≡C-C(O)X-Y-SiRₐR' ₍₃₋ₐ₎ (II)
wobei R für eine hydrolysierbare Gruppe steht, R' für eine Hydrocarbylgruppe mit 1 bis 6 Kohlenstoffatomen steht, a einen Wert im Bereich von 1 bis einschließlich 3 aufweist, Y für eine zweiwertige organische Abstandhalterbindung steht, die mindestens ein Kohlenstoffatom umfasst, das die Bindung -C(O)X- von dem Si-Atom trennt, und R" für Wasserstoff oder eine Gruppe mit elektronenabziehender Wirkung im Bezug auf die -CH=CH- oder -C≡C-Bindung steht, X aus S und O ausgewählt ist, und das Silan mit dem Dienelastomer in Abwesenheit freier radikaler Initiatoren umgesetzt wird und wobei R eine Acyloxy-, Ketoxim-, Amido-, Amino-, Aminoxy-, Alkenyloxy- oder Alkoxygruppe mit Ethylenglycolpolymerkette oder Ethoxy ist.

2. Verfahren nach Anspruch 1, **dadurch gekennzeichnet, dass** jede R-Gruppe in dem ungesättigten Silan (I) oder (II) eine Alkoxygruppe ist.

3. Verfahren nach Anspruch 1 oder Anspruch 2, **dadurch gekennzeichnet, dass** das ungesättigte Silan (I) oder (II) teilweise hydrolysiert und zu Oligomeren kondensiert ist.

4. Verfahren nach einem der Ansprüche 1 bis 3, **dadurch gekennzeichnet, dass** das ungesättigte Silan (I) Acryloxypropyltriethoxysilan, Acryloxymethyltriethoxysilan und/oder Bis(triethoxysilylpropyl)fumarat umfasst.

5. Verfahren nach einem der Ansprüche 1 bis 4, **dadurch gekennzeichnet, dass** die Formulierung Isoprenkautschuk, vorzugsweise Naturkautschuk oder ein synthetisches Polymer enthält, das ein Homopolymer oder Copolymer eines Dienmonomers ist.

6. Verfahren nach einem der Ansprüche 1 bis 5, **dadurch gekennzeichnet, dass** das ungesättigte Silan (I) oder (II) während der Reaktion zu 0,5 bis 15,0 Gew.-% des Dienelastomers vorhanden ist.

7. Verfahren nach einem der Ansprüche 1 bis 6, **dadurch gekennzeichnet, dass** das Dienelastomer und das ungesättigte Silan (I) oder (II) bei einer Temperatur im Bereich von 90 °C bis 200 °C, vorzugsweise 120 °C bis 180 °C umgesetzt werden.

8. Verfahren nach einem der Ansprüche 1 bis 7, **dadurch gekennzeichnet, dass** ein Füllmittel das vorzugsweise Silica ist, während der Reaktion des Dienelastomers mit dem ungesättigten Silan (I) oder (II) vorhanden ist.

9. Verfahren zur Herstellung eines Kautschukartikels, **dadurch gekennzeichnet, dass** eine gefüllte Elastomerzusammensetzung, die mit dem Verfahren nach Anspruch 8 hergestellt wurde, geformt und mit Schwefel, einer Schwefelverbindung, Peroxid oder durch Kontakt mit Feuchtigkeit mit oder ohne Gegenwart eines Silanol-Kondensationskatalysatoren gehärtet wird.

10. Verfahren nach einem der vorstehenden Ansprüche, wobei X O ist.

11. Gepfropftes Dienelastomer mit der Formel:
• R"-CH(P)-CH2-C(O)X-Y-SiRₐR' ₍₃₋ₐ₎ und/oder der Formel
• R"-CH₂-CH(P)-C(O)X-Y-SiRₐR' ₍₃₋ₐ₎ und/oder der Formel
• R"-C(P)=CH-C(O)X-Y-SiRₐR' ₍₃₋ₐ₎ und/oder der Formel
• R'-CH=C(P)-C(O)X-'Y-SiRₐR' ₍₃₋ₐ₎,
wobei R für eine hydrolysierbare Gruppe steht, wobei R eine Acyloxy-, Ketoxim-, Amido-, Amino-, Aminoxy-, Alkenyloxy- oder Alkoxygruppe mit Ethy-lenglycolpolymerkette oder Ethoxy ist, R' für eine Hydrocarbylgruppe mit 1 bis 6 Kohlenstoffatomen steht, a einen Wert im Bereich von 1 bis einschließlich 3 aufweist, Y für eine zweiwertige organische Abstandhalterbindung steht, die mindestens ein Kohlenstoffatom umfasst, das die -C(O)X-Bindung von dem Si-Atom trennt, X S oder O sein kann, P für einen Dienelastomerpolymerrest steht,
und R" für Wasserstoff oder eine Gruppe der Formel-C(O)X-Y-SiRₐR' _{(3·a)} steht, wobei Y, R und R' wie vorstehend definiert sind.

12. Gepfropftes Dienelastomer nach Anspruch 11, wobei Y ein oder mehrere Heteroatome enthält und/oder X O ist.

13. Verwendung eines Silans mit der Formel:
• R"-CH=CH-C(O)X-Y-SiRₐR' ₍₃₋ₐ₎ (I) oder
• R"-C≡C-C(O)X-Y-SiRₐR' ₍₃₋ₐ₎ (II)
wobei R für eine hydrolysierbare Gruppe steht, wobei R eine Acyloxy-, Ketoxim-, Amido-, Amino-, Aminoxy-, Alkenyloxy- oder Alkoxygruppe mit Ethylenglycol-polymerkette oder Ethoxy ist, R' für eine Hydrocarbylgruppe mit 1 bis 6 Kohlenstoffatomen ist, a einen Wert im Bereich von 1 bis einschließlich 3 aufweist, Y für eine zweiwertige organische Abstandhalterbindung steht, die mindestens ein Kohlenstoffatom umfasst, das die -C(O)X-Bindung von dem Si-Atom trennt, X S oder O sein kann, und R" für Wasserstoff oder eine Gruppe mit einer elektronenabziehenden Wirkung im Bezug auf die -CH=CH- oder -C=C- Bindung steht, als Haftverbesserer für eine Dienelastomerzusammensetzung, die ein verstärkendes Füllmittel enthält.

14. Verwendung eines Silans nach Anspruch 13, wobei X O ist.

15. Verwendung einer härtbaren Kautschukzusammensetzung, die durch das Verfahren nach einem der Ansprüche 1 bis 10 hergestellt wurde, bei der Herstellung von Reifen oder Teilen davon oder gefertigten Gummierzeugnissen, Gurten oder Schläuchen.

## Revendications

1. Procédé de modification d'un élastomère diénique par réaction avec un silane à insaturation oléfinique ayant au moins un groupe hydrolysable lié au silicium, **caractérisé en ce que** le silane répond à la formule :
• R"-CH=CH-C(O)X-Y-SiRaR' (3-a) (I) ou
• R"-C≡C-C(O)X-Y-SiRaR' (3-a) (II)
dans laquelle R représente un groupe hydrolysable ; R' représente un groupe hydrocarbyle ayant de 1 à 6 atomes de carbone ; la valeur de a est dans la fourchette de 1 à 3, bornes incluses ; Y représente un groupe de liaison espaceur organique divalent comprenant au moins un atome de carbone séparant le groupe de liaison -C(O)X- de l'atome de silicium, et R" représente l'hydrogène ou un groupe ayant un effet électro-attracteur par rapport à la liaison -CH=CHou -C≡C- ; X est choisi parmi S et 0 ; et on fait réagir le silane avec l'élastomère diénique en l'absence de tout initiateur à radical libre et où R est un groupe acyloxy, cétoxime, amido, amino, aminoxy, alkényloxy ou alkoxy contenant une chaîne polymère éthylène glycol ou éthoxy.

2. Procédé selon la revendication 1 **caractérisé en ce que** chaque groupe R du silane insaturé (I) ou (II) est un groupe alkoxy.

3. Procédé selon la revendication 1 ou la revendication 2 **caractérisé en ce que** le silane insaturé (I) ou (II) est partiellement hydrolysé et condensé en oligomères.

4. Procédé selon l'une quelconque des revendications 1 à 3 **caractérisé en ce que** le silane insaturé (I) comprend un -acryloxypropyltriethoxysilane, acryloxyméthyltriethoxysilane et/ou bis-(triéthoxysilylpropyl)-fumarate.

5. Procédé selon l'une quelconque des revendications 1 à 4 **caractérisé en ce que** la formulation contient du caoutchouc à l'isoprène, de préférence du caoutchouc naturel ou un polymère synthétique qui est un homopolymère ou un copolymère d'un monomère diénique.

6. Procédé selon l'une quelconque des revendications 1 à 5 **caractérisé en ce que** le silane insaturé (I) ou (II) est présent de 0,5 à 15,0 % en poids sur la base de l'élastomère diénique pendant la réaction.

7. Procédé selon l'une quelconque des revendications 1 à 6 **caractérisé en ce que** l'élastomère diénique et le silane insaturé (I) ou (II) sont mis à réagir à une température sur la plage de 90 °C à 200 °C, de préférence 120 °C à 180 °C.

8. Procédé selon l'une quelconque des revendications 1 à 7 **caractérisé en ce qu'**un agent de charge, de préférence la silice, est présent pendant la réaction de l'élastomère diénique avec le silane insaturé (I) ou (II).

9. Procédé de production d'un article de caoutchouc **caractérisé en ce qu'**une composition d'élastomère chargée préparée par le procédé de la revendication 8 est profilée et durcie par du soufre, un composé soufré, un peroxyde ou par exposition à de l'humidité en présence ou non d'un catalyseur de condensation des silanols

10. Procédé selon l'une quelconque des revendications précédentes, où X est O.

11. Élastomère diénique greffé répondant à la formule :
• R"-CH(P)-CH2-C(O)X-Y-SiRaR' (3-a) et/ou à la formule
• R"-CH2-CH(P)-C(O)X-Y-SiRaR' (3-a) et/ou à la formule
• R"-C(P)=CH-C(O)X-Y-SiRaR' (3-a) et/ou à la formule
• Rn-CH=C(P)-C(O)X-'Y-SiRaR' (3-a),
où R représente un groupe hydrolysable ; où R est un groupe acyloxy, cétoxime, amido, amino, aminoxy, alkényloxy ou alkoxy contenant une chaîne polymère éthylène glycol ou éthoxy, R' représente un groupe hydrocarbyle ayant de 1 à 6 atomes de carbone ; la valeur de a est dans la fourchette de 1 à 3, bornes incluses ; Y représente un groupe de liaison espaceur organique divalent comprenant au moins un atome de carbone séparant le groupe de liaison - C(O)X- de l'atome de silicium ; X peut être S ou 0 ; P représente un résidu polymère d'élastomère diénique ; et R" représente l'hydrogène ou un groupe de formule -C(O)X-Y-SiRaR' (3-a) dans laquelle Y, R et R' sont tels de définis ci-dessus.

12. Élastomère diénique greffé selon la revendication 11, ou Y contient un ou plusieurs hétéroatomes et/ou X est O.

13. Utilisation d'un silane de formule :
• R"-CH=CH-C(O)X-Y-SiRaR' (3-a) (I) ou
• R"-C≡C-C(O)X-Y-SiRaR' (3-a) (II)
où R représente un groupe hydrolysable, R étant un groupe acyloxy, cétoxime, amido, amino, aminoxy, alkényloxy ou alkoxy contenant une chaîne polymère éthylène glycol ou éthoxy ; R' représente un groupe hydrocarbyle ayant de 1 à 6 atomes de carbone ; la valeur de a est dans la fourchette de 1 à 3, bornes incluses ; Y représente un groupe de liaison espaceur organique divalent comprenant au moins un atome de carbone séparant le groupe de liaison - C(O)X- de l'atome de silicium ; X peut être S ou 0 ; et R" représente l'hydrogène ou un groupe ayant un effet électro-attracteur par rapport à la liaison -CH=CH- ou -C≡C-, par exemple un agent de couplage pour une composition d'élastomère diénique contenant un agent de charge renforçant.

14. Utilisation d'un silane selon la revendication 13, dans lequel X est O.

15. Utilisation de la composition de caoutchouc durcissable produite par le procédé de l'une quelconque des revendications 1 à 10 dans le cadre de la production de pneumatiques ou d'une partie quelconque de pneumatiques ou d'articles, courroies ou tuyaux en caoutchouc ouvragé.
